# EUROPEAN PATENT APPLICATION

(11) **EP 4 564 991 A1**
(43) Date of publication of application: **04.06.2025**
(21) Application number: 23846420.0
(22) Date of filing: 21.07.2023
(51) Int. Cl.: H04W 76/18, H04W 48/14, H04W 48/18

(54) **UE (USER EQUIPMENT)**

(30) Priority: 26.07.2022 JP 2022118330
(71) Applicant: Sharp Kabushiki Kaisha, Sakai City, Osaka 590-8522 (JP)
(72) Inventor: IZUMI, Masaki, Sakai City, Osaka 590-8522 (JP); SUGAWARA, Yasuo, Sakai City, Osaka 590-8522 (JP); CHIBA, Shuichiro, Sakai City, Osaka 590-8522 (JP)
(74) Representative: Müller-Boré & Partner Patentanwälte PartG mbB
(86) International application number: PCT/JP2023/026879
(87) International publication number: WO 2024/024690

(57) **Abstract**

Behaviors in a case that a UE is subject to registration reject from an NPN for localized services have not been clarified. A User Equipment (UE) includes a transmission and/or reception unit, a controller, and a storage unit. The controller manages a first list and a second list. The first list is a "temporarily forbidden Stand-alone Non-Public Networks (SNPNs) for access for localized services in SNPN" list. The second list is a "permanently forbidden SNPNs for access for localized services in SNPN" list. The transmission and/or reception unit transmits a registration request message to a network, and receives a registration reject message including a first cause value or a second cause value from the network. The first cause value is a cause value indicating temporarily not authorized for this SNPN. In a case of receiving the first cause value, the controller stores an SNPN ID in the first list stored by the storage unit, based on the first cause value. The second cause value is a cause value indicating permanently not authorized for this SNPN. In a case of receiving the second cause value, the controller stores the SNPN ID in the second list stored by the storage unit, based on the second cause value.

## Description

### Technical Field

The present invention relates to a UE (User Equipment).

### Background Art

In the 3rd Generation Partnership Project (3GPP), system architecture of a 5G System (5GS), which is a fifth generation (5G) mobile communication system, has been studied, and discussions are underway to support new procedures and new functions (see NPLs 1 to 4). In recent years, active discussions are being carried out on a method of using localized services in a Non-Public Network (NPN) (see NPL 5).

### Citation List

### Non Patent Literature

NPL 1: 3GPP TS 23.501 V17.5.0 (2022-06); 3rd Generation Partnership Project; Technical Specification Group Services and System Aspects; System architecture for the 5G System (5GS); Stage 2 (Release 17)
NPL 2: 3GPP TS 23.502 V17.5.0 (2022-06); 3rd Generation Partnership Project; Technical Specification Group Services and System Aspects; Procedures for the 5G System (5GS); Stage 2 (Release 17)
NPL 3: 3GPP TS 24.501 V17.7.1 (2022-06); 3rd Generation Partnership Project; Technical Specification Group Core Network and Terminals; Non-Access-Stratum (NAS) protocol for 5G System (5GS); Stage 3 (Release 17)
NPL 4: 3GPP TS 23.122 V17.7.1 (2022-06); 3rd Generation Partnership Project; Technical Specification Group Core Network and Terminals; Non-Access-Stratum (NAS) functions related to Mobile Station (MS) in idle mode (Release 17)
NPL 5: 3GPP TR 23.700-08 V1.0.0 (2022-05); 3rd Generation Partnership Project; Technical Specification Group Services and System Aspects; Study on enhanced support of Non-Public Networks; Phase 2 (Release 18)

### Summary of Invention

### Technical Problem

For the 5G System (5GS), a 5G Core Network (5GCN) which is a new core network has been studied for the purpose of providing various services. Note that provision of a private network that specific users can use for specific purposes such as a Non-Public Network (NPN) defined separately from a Public Land Mobile Network (PLMN) which is a public network and functions for realizing a private network have also been studied in the 5GS.

At present, behaviors in a case that the UE is subject to registration reject from the NPN for the localized services have not been clarified. Specifically, the NPN for the localized services may be an SNPN or a PNI-NPN. In the current specifications, a reject cause value corresponding to the SNPN or a reject cause value corresponding to the PNI-NPN is present; however, a reject cause value corresponding to the NPN for the localized services is not present.

An aspect of the present invention has been made in light of the above circumstances. An object of the aspect is to clarify behaviors in a case that a UE is subject to registration reject from an NPN for localized services.

### Solution to Problem

A User Equipment (UE) according to an aspect of the present invention includes a transmission and/or reception unit and a controller. The controller manages a first list and a second list. The first list is a "temporarily forbidden Stand-alone Non-Public Networks (SNPNs) for access for localized services in SNPN" list. The second list is a "permanently forbidden SNPNs for access for localized services in SNPN" list. The transmission and/or reception unit transmits a registration request message to a network, and receives a registration reject message including a first cause value or a second cause value from the network. The first cause value is a cause value indicating temporarily not authorized for this SNPN. In a case of receiving the first cause value, the controller stores an SNPN ID in the first list stored by the storage unit, based on the first cause value. The second cause value is a cause value indicating permanently not authorized for this SNPN. In a case of receiving the second cause value, the controller stores the SNPN ID in the second list stored by the storage unit, based on the second cause value.

A communication control method performed by a User Equipment (UE) according to an aspect of the present invention includes the steps of managing a first list and a second list, wherein the first list is a "temporarily forbidden Stand-alone Non-Public Networks (SNPNs) for access for localized services in SNPN" list, wherein the second list is a "permanently forbidden SNPNs for access for localized services in SNPN" list; transmitting, by the UE, a registration request message to a network; receiving, by the UE, a registration reject message including a first cause value or a second cause value from the network, wherein the first cause value is a cause value indicating temporarily not authorized for this SNPN, wherein the second cause value is a cause value indicating permanently not authorized for this SNPN; in a case of receiving the first cause value, storing, by the UE, an SNPN ID in the first list stored by the UE, based on the first cause value; and in a case of receiving the second cause value, storing, by the UE, the SNPN ID in the second list stored by the UE, based on the second cause value.

### Advantageous Effects of Invention

According to an aspect of the present invention, the behaviors in a case that the UE is subject to registration reject from the NPN for the localized services can be clarified.

### Brief Description of Drawings

FIG. 1 is a diagram illustrating an overview of a mobile communication system (EPS/5GS).
FIG. 2 is a diagram illustrating a detailed configuration of the mobile communication system (EPS/5GS).
FIG. 3 is a diagram illustrating an apparatus configuration of a UE.
FIG. 4 is a diagram illustrating a configuration of an access network apparatus (gNB) in the 5GS.
FIG. 5 is a diagram illustrating a configuration of a core network apparatus (AMF/SMF/UPF) in the 5GS.
FIG. 6 is a diagram illustrating a registration procedure.
FIG. 7 is a diagram illustrating a UE-initiated de-registration procedure.
FIG. 8 is a diagram illustrating a network-initiated de-registration procedure.
FIG. 9 is a diagram illustrating a UE-initiated NAS transport procedure.
FIG. 10 is a diagram illustrating a network-initiated NAS transport procedure.

### Description of Embodiments

A preferred embodiment for carrying out an aspect of the present invention will be described below with reference to the drawings. Note that an embodiment of a mobile communication system to which an aspect of the present invention is applied will be described as an example in the present embodiment.

### 1. Overview of System

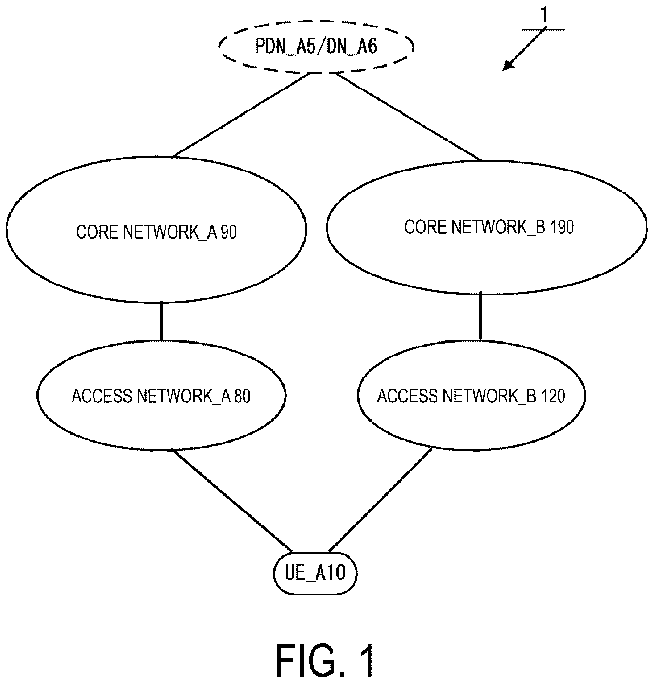

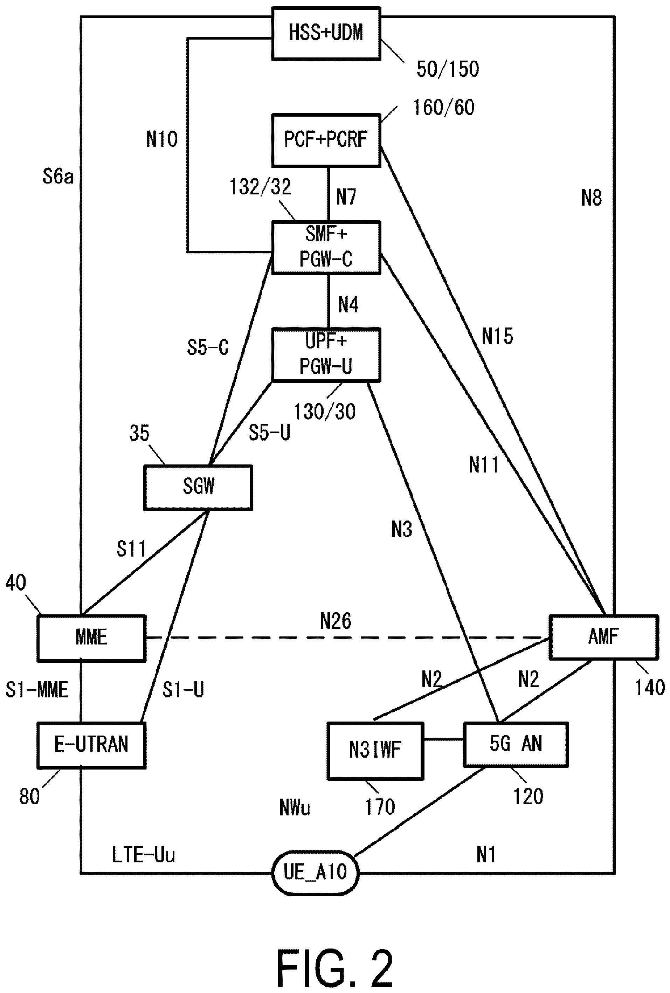

First, FIG. 1 is a diagram illustrating an overview of a mobile communication system 1 used in each embodiment, and FIG. 2 is a diagram illustrating a detailed configuration of the mobile communication system 1.

FIG. 1 illustrates the mobile communication system 1 including a UE_A 10, an access network_A 80, a core network_A 90, a Packet Data Network (PDN)_A 5, an access network_B 120, a core network_B 190, and a Data Network (DN)_A 6.

In the following description, the reference numerals of these apparatuses and functions may be omitted, as in a UE, an access network_A, a core network_A, a PDN, an access network_B, a core network_B, a DN, and the like.

In addition, FIG. 2 illustrates apparatuses and functions such as the UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, a UDM 150, and an N3IWF 170, and interfaces for connecting these apparatuses and functions to each other.

In the following description, the reference numerals of these apparatuses and functions may be omitted as in a UE, an E-UTRAN, an MME, an SGW, a PGW-U, a PGW-C, a PCRF, an HSS, a 5G AN, an AMF, a UPF, an SMF, a PCF, a UDM, an N3IWF, and the like.

Note that an Evolved Packet System (EPS) that is a 4G system includes an access network A and a core network_A and may further include a UE and/or a PDN. In addition, a 5G System (5GS) that is a 5G system includes UE, an access network_B, and a core network_B and may further include a DN.

The UE is an apparatus that can be connected to a network service over 3GPP access (also referred to as a 3GPP access network or a 3GPP AN) and/or non-3GPP access (also referred to as a non-3GPP access network or a non-3GPP AN). The UE may be a terminal apparatus capable of performing radio communication, such as a mobile phone or a smartphone, and may be a terminal apparatus that can be connected to both the EPS and the 5GS. The UE may include a Universal Integrated Circuit Card (UICC) and an Embedded UICC (eUICC). Note that the UE may be referred to as user equipment or a terminal apparatus.

In addition, the access network_A corresponds to an Evolved Universal Terrestrial Radio Access Network (E-UTRAN) and/or a wireless LAN access network. In the E-UTRAN, one or more evolved Node Bs (eNBs) 45 are deployed. Note that, in the following description, the reference numeral of the eNB 45 may be omitted as in eNB. In addition, in a case that there are multiple eNBs, the eNBs are connected to each other via, for example, an X2 interface. In addition, one or more access points are deployed on the wireless LAN access network.

In addition, the access network_B corresponds to a 5G access network (5G AN). The 5G AN includes an NG Radio Access Network (NG-RAN) and/or a non-3GPP access network. One or more NR NodeBs (gNBs) 122 are deployed on the NG-RAN. Note that in the following description, the symbol for the gNB 122 may be omitted as a gNB. The gNB is a node that provides a New Radio (NR) user plane and control plane to the UE, and is connected to a 5GCN via an NG interface (including an N2 interface or an N3 interface). In other words, the gNB is a base station apparatus newly designed for the 5GS and has functions different from those of the base station apparatus (eNB) used in the EPS that is a 4G system. In addition, in a case that there are multiple gNBs, the gNBs are connected to each other via, for example, an Xn interface.

In addition, a non-3GPP access network may be an untrusted non-3GPP access network or a trusted non-3GPP access network. Here, the untrusted non-3GPP access network may be a non-3GPP access network that does not manage security on the access network, for example, a public wireless LAN. On the other hand, the trusted non-3GPP access network may be an access network defined by 3GPP and may include a trusted non-3GPP access point (TNAP) and a trusted non-3GPP Gateway function (TNGF).

In addition, in the following description, the E-UTRAN and the NG-RAN may be referred to as 3GPP access. In addition, the wireless LAN access network and the non-3GPP AN may be referred to as non-3GPP access. In addition, nodes deployed on the access network_B may also be collectively referred to as NG-RAN nodes.

In addition, in the following description, the access network_A, and/or the access network_B, and/or an apparatus included in the access network_A, and/or an apparatus included in the access network_B may be referred to as an access network or an access network apparatus.

The core network_A corresponds to an Evolved Packet Core (EPC). In the EPC, for example, a Mobility Management Entity (MME), a Serving Gateway (SGW), a Packet Data Network Gateway (PGW)-U, a PGW-C, a Policy and Charging Rules Function (PCRF), a Home Subscriber Server (HSS), and the like are deployed.

In addition, the core network_B corresponds to a 5G Core Network (5GCN). An Access and Mobility Management Function (AMF), a User Plane Function (UPF), a Session Management Function (SMF), a Policy Control Function (PCF), a Unified Data Management (UDM), and the like are deployed on the 5GCN. Here, the 5GCN may be referred to as a 5GC.

In addition, in the following description, the core network_A, and/or the core network_B, an apparatus included in the core network_A, and/or an apparatus included in the core network_B may be referred to as a core network, a core network apparatus, or an intra-core network apparatus.

The core network (the core network_A and/or the core network_B) may refer to an IP mobile communication network operated by a mobile communication (Mobile Network Operator (MNO)) connecting the access network (the access network_A and/or the access network_B) and the PDN and/or the DN, a core network for a mobile communication operator that operates and manages the mobile communication system 1, or a core network for a virtual mobile communication operator and a virtual mobile communication service provider such as a Mobile Virtual Network Operator (MVNO) and a Mobile Virtual Network Enabler (MVNE).

In addition, although FIG. 1 illustrates a case that the PDN and the DN are the same, the PDN and the DN may be different. The PDN may be a Data Network (DN) that provides communication services to the UE. Note that the DN may be configured as a packet data service network or may be configured for each service. In addition, the PDN may include a connected communication terminal. Thus, "to be connected to the PDN" may mean "to be connected to a communication terminal and a server apparatus deployed in the PDN". In addition, "to transmit and/or receive user data to and/or from the PDN" may mean "to transmit and/or receive user data to and/or from a communication terminal and a server apparatus deployed in the PDN". Note that the PDN may be referred to as a DN, and the DN may be referred to as a PDN.

In addition, in the following, at least some of the access network_A, the core network_A, the PDN, the access network_B, the core network_B, and the DN, and/or one or more apparatuses included in these may be referred to as a network or a network apparatus. In other words, the expression that "the network and/or the network apparatus transmits and/or receives a message and/or performs a procedure" means that "at least some of the access network_A, the core network_A, the PDN, the access network_B, the core network_B, and the DN, and/or one or more apparatuses included in these transmit and/or receive a message and/or perform a procedure".

In addition, the UE can be connected to the access network. In addition, the UE can be connected to the core network over the access network. Furthermore, the UE can be connected to the PDN or the DN over the access network and the core network. In other words, the UE can transmit and/or receive (communicate) user data to and/or from the PDN or the DN. In a case that user data is transmitted and/or received, not only Internet Protocol (IP) communication but also non-IP communication may be used.

Here, IP communication refers to data communication using an IP, and data is transmitted and/or received using IP packets. Each IP packet includes an IP header and a payload part. In the payload part, data transmitted and/or received by the apparatuses and functions included in the EPS and the apparatuses and functions included in the 5GS may be included. In addition, non-IP communication refers to data communication performed using no IP, in which data is transmitted and/or received in a form different from the structure of an IP packet. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

In addition, apparatuses which are not illustrated in FIG. 2 may be included in the access network_A, the core network_A, the access network_B, the core network_B, the PDN_A, and the DN_A. For example, the core network A and/or the core network_B may include an Authentication Server Function (AUSF) and an Authentication, authorization, and accounting (AAA) server (AAA-S).

Here, the AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

The AAA server is an apparatus that is connected directly to the AUSF or indirectly to the AUSF via another network apparatus and has authentication, authorization, and billing functions. The AAA server may be a network apparatus within the core network. Note that the AAA server may not be included in the core network_A and/or the core network_B and may be included in the PLMN. In other words, the AAA server may be a core network apparatus or may be an apparatus outside the core network. For example, the AAA server may be a server apparatus within the PLMN managed by a 3rd party.

Note that, although each of the apparatuses and functions is illustrated one by one for simplicity in FIG. 2, multiple similar apparatuses and functions may be included in the mobile communication system 1. Specifically, multiple apparatuses and functions such as multiple pieces of UE_A 10, E-UTRANs 80, MMEs 40, SGWs 35, PGW-Us 30, PGW-Cs 32, PCRFs 60, HSSs 50, 5G ANs 120, AMFs 140, UPFs 130, SMFs 132, PCFs 160, and/or UDMs 150 may be included in the mobile communication system 1.

A UPF_A 235 is connected to the DN, the SMF, other UPFs and the access network. The UPF_A 235 may play roles of an anchor to intra-RAT mobility or inter-RAT mobility, Packet routing & forwarding, an Uplink Classifier (UL CL) function to support routing of multiple traffic flows for one DN, a Branching point function to support a multi-homed PDU session, QoS processing for a user plane, verification of uplink traffic, buffering of downlink packets, a function of triggering Downlink Data Notification, and the like. Furthermore, the UPF_A 235 may be a relay apparatus that transfers the user data as a gateway between the DN and the core network_B 190. Note that the UPF_A 235 may serve as a gateway for IP communication and/or non-IP communication. Furthermore, the UPF_A 235 may have a function of transferring IP communication or a function to perform conversion between non-IP communication and IP communication. Furthermore, the multiple gateways deployed may serve as gateways for connecting the core network_B 190 with a single DN. Note that the UPF_A 235 may have connectivity with another NF or may be connected to each apparatus via another NF.

Note that, a UPF_C 239 (also referred to as a branching point or an uplink classifier), which is a UPF different from the UPF_A 235, may be present as an apparatus or NF between the UPF_A 235 and the access network. With the UPF_C 239 present, the PDU session between the UE and the DN is established via the access network, the UPF_C 239, and the UPF_A 235.

The UPF 130 may be an apparatus similar to the UPF_A 235. Note that the UPF 130 and the UPF_A 235 may be described with the symbols thereof omitted, like the UPF.

### 2. Configuration of Each Apparatus

Next, a configuration of each apparatus (the UE, and/or the access network apparatus, and/or the core network apparatus) used in each embodiment will be described with reference to the drawings. Note that each apparatus may be configured as physical hardware, may be configured as logical (virtual) hardware configured in general-purpose hardware, or may be configured as software. In addition, at least a part (including all) of the functions of each apparatus may be configured as physical hardware, logical hardware, or software.

Note that each storage unit (a storage unit_A 340, a storage unit_A 440, a storage unit_B 540, a storage unit_A 640, and a storage unit_B 740) in each apparatus and function to be described later includes, for example, a semiconductor memory, a Solid State Drive (SSD), a Hard Disk Drive (HDD), or the like. In addition, each storage unit can store not only information originally configured at the time of being shipped, but also various pieces of information transmitted and/or received to and/or from apparatuses and functions (for example, the UE, and/or the access network apparatus, and/or the core network apparatus, and/or the PDN, and/or the DN) other than the apparatus and functions of each storage unit. In addition, each storage unit can store identification information, control information, flags, parameters, and the like included in a control message transmitted and/or received in various communication procedures to be described later. In addition, each storage unit may store these pieces of information for each UE. In addition, in a case that each storage unit performs interworking between the 5GS and the EPS, each storage unit can store a control message and user data transmitted and/or received to and/or from the apparatuses and functions included in the 5GS and/or the EPS. In this case, not only data transmitted and/or received over the N26 interface but also data transmitted and/or received without using the N26 interface can be stored.

### 2.1. Apparatus Configuration of UE

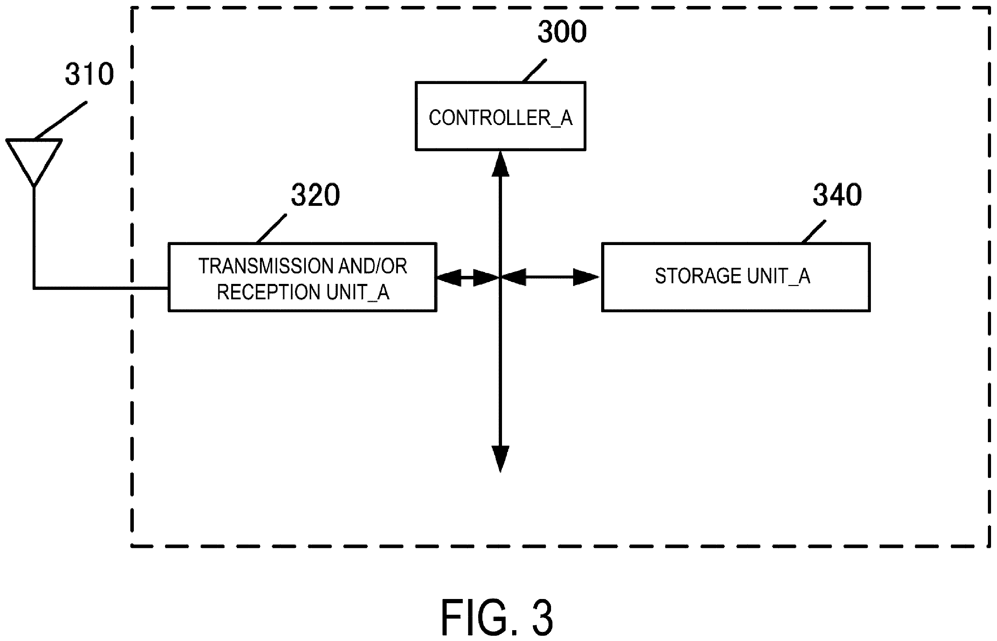

First, an apparatus configuration example of the User Equipment (UE) will be described with reference to FIG. 3. The UE includes a controller_A 300, an antenna 310, a transmission and/or reception unit_A 320, and a storage unit_A 340. The controller_A 300, the transmission and/or reception unit_A 320, and the storage unit_A 340 are connected via a bus. The transmission and/or reception unit_A 320 is connected to the antenna 310.

The controller_A 300 is a function unit that controls overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with a base station apparatus (the eNB or the gNB) within the access network via the antenna. In other words, with the use of the transmission and/or reception unit_A 320, the UE can transmit and/or receive user data and/or control information to and/or from the access network apparatus, and/or the core network apparatus, and/or the PDN, and/or the DN.

To provide detailed description with reference to FIG. 2, by using the transmission and/or reception unit_A 320, the UE can communicate with the base station apparatus (eNB) within the E-UTRAN over an LTE-Uu interface. In addition, the UE can communicate with the base station apparatus (gNB) within the 5G AN with the use of the transmission and/or reception unit_A 320. In addition, the UE can transmit and/or receive a Non-Access-Stratum (NAS) message to and/or from the AMF over an N1 interface with the use of the transmission and/or reception unit_A 320. However, the N1 interface is a logical interface, and thus communication between the UE and the AMF is actually performed over the 5G AN.

The storage unit_A 340 is a function unit that stores programs, user data, control information, and the like necessary for each operation of the UE.

### 2.2. Apparatus Configuration of gNB

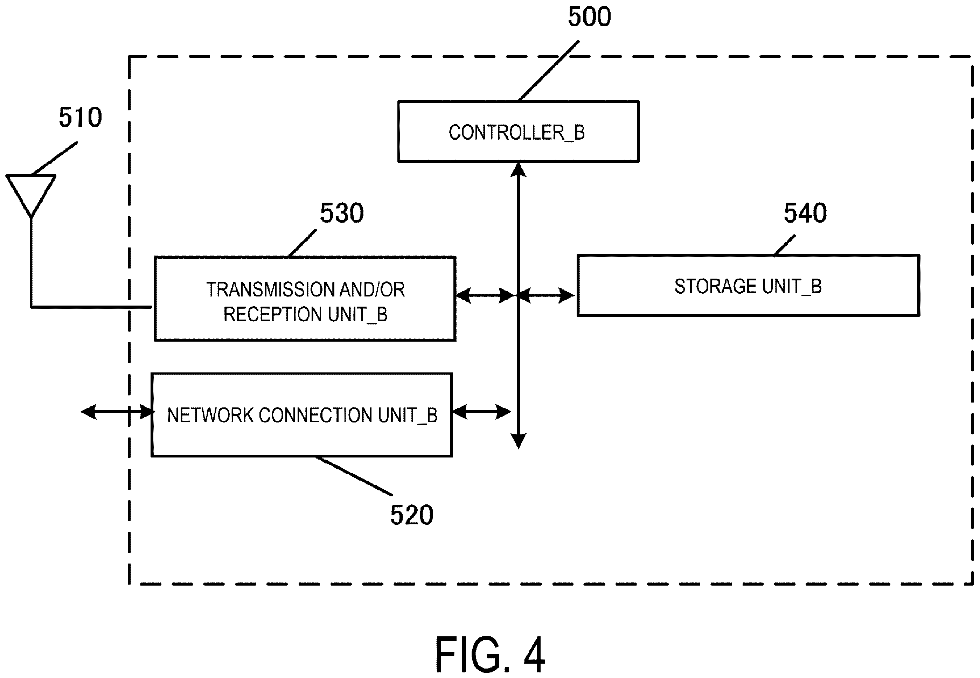

Next, an apparatus configuration example of the gNB will be described with reference to FIG. 4. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, with the use of the network connection unit_B 520, the gNB can transmit and/or receive user data and/or control information to and/or from the AMF and/or the UPF.

The transmission and/or reception unit_B 530 is a function unit that performs radio communication with the UE via the antenna 510. In other words, with the use of the transmission and/or reception unit_B 530, the gNB can transmit and/or receive user data and/or control information to and/or from the UE.

To provide detailed description with reference to FIG. 2, by using the network connection unit_B 520, the gNB within the 5G AN can communicate with the AMF over the N2 interface and can communicate with the UPF over the N3 interface. In addition, the gNB can communicate with the UE with the use of the transmission and/or reception unit_B 530.

The storage unit_B 540 is a function unit that stores programs, user data, control information, and the like necessary for each operation of the gNB.

### 2.3. Apparatus Configuration of AMF

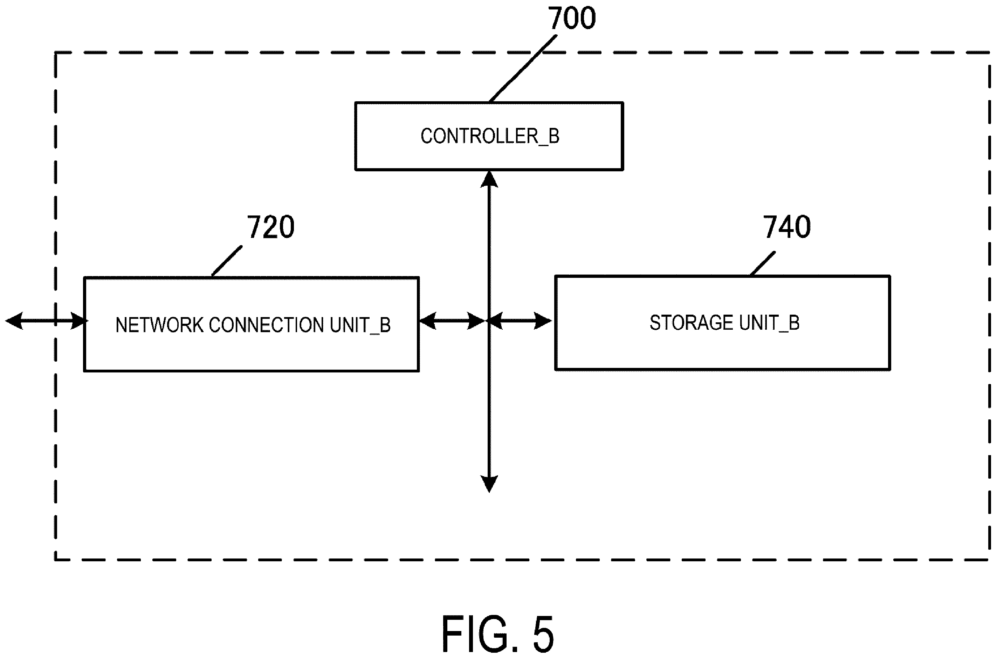

Next, an apparatus configuration example of the AMF will be described with reference to FIG. 5. The AMF includes a controller_B 700, a network connection unit_B 720, and a storage unit_B 740. The controller_B 700, the network connection unit_B 720, and the storage unit_B 740 are connected via a bus. The AMF may be a node that handles a control plane.

The controller_B 700 is a function unit that controls overall operations and functions of the AMF. The controller_B 700 reads and performs various programs stored in the storage unit_B 740 as necessary, and thereby implements various types of processing in the AMF.

The network connection unit_B 720 is a function unit for the AMF to connect to the base station apparatus (gNB) within the 5G AN, and/or the SMF, and/or the PCF, and/or the UDM, and/or an SCEF. In other words, with the use of the network connection unit_B 720, the AMF can transmit and/or receive user data and/or control information to and/or from the base station apparatus (gNB) in the 5G AN, and/or the SMF, and/or the PCF, and/or the UDM, and/or the SCEF.

To provide detailed description with reference to FIG. 2, by using a network connection unit_A 620, the AMF within the 5GCN can communicate with the gNB over the N2 interface, can communicate with the UDM over an N8 interface, can communicate with the SMF over an N11 interface, and can communicate with the PCF over an N15 interface. In addition, the AMF can transmit and/or receive a NAS message to and/or from the UE over the N1 interface with the use of the network connection unit_A 620. However, the N1 interface is a logical interface, and thus communication between the UE and the AMF is actually performed over the 5G AN. In addition, in a case that the AMF supports an N26 interface, the AMF can communicate with the MME over the N26 interface with the use of the network connection unit_A 620.

The storage unit_B 740 is a function unit that stores programs, user data, control information, and the like necessary for each operation of the AMF.

Note that the AMF has a function of exchanging a control message with the RAN using the N2 interface, a function of exchanging a NAS message with the UE using the N1 interface, a function of performing encryption and integrity protection of a NAS message, a Registration management (RM) function, a Connection management (CM) function, a Reachability management function, a Mobility management function for the UE or the like, a function of transferring a Session Management (SM) message between the UE and the SMF, an Access Authentication (Access Authorization) function, a security anchor function (Security Anchor Functionality (SEA)), a Security Context Management (SCM) function, a function of supporting the N2 interface for a Non-3GPP Interworking Function (N3IWF), a function of supporting transmission and/or reception of a NAS signal to an/or from the UE via the N3IWF, a function of authenticating the UE connected via the N3IWF, and the like.

In addition, in registration management, an RM state for each UE is managed. The RM state may be synchronized between the UE and the AMF. The RM state includes a deregistered state (RM-DEREGISTERED state) and a registered state (RM-REGISTERED state). In the RM-DEREGISTERED state, because the UE is not registered with the network, the AMF is in a state of being unable to reach the UE, because a UE context in the AMF does not have location information and routing information that are valid for the UE. In addition, in the RM-REGISTERED state, because the UE is registered in the network, the UE can receive a service that requires registration with the network. Note that the RM state may be referred to as a 5GMM state. In this case, the RM-DEREGISTERED state may be referred to as a 5GMM-DEREGISTERED state, and the RM-REGISTERED state may be referred to as a 5GMM-REGISTERED state.

In other words, 5GMM-REGISTERED may be a state in which each apparatus establishes a 5GMM context, or may be a state in which each apparatus establishes a PDU session context. Note that, in a case that each apparatus is in 5GMM-REGISTERED, the UE_A 10 may initiate transmission and/or reception of user data and a control message, or may respond to paging. Furthermore, note that, in a case that each apparatus is in 5GMM-REGISTERED, the UE_A 10 may perform a registration procedure other than a registration procedure for initial registration, and/or a service request procedure.

In addition, 5GMM-DEREGISTERED may be a state in which each apparatus does not establish the 5GMM context, may be a state in which the location information of the UE_A 10 is not known to the network, or may be a state in which the network is unable to reach the UE_A 10. Note that, in a case that each apparatus is in 5GMM-DEREGISTERED, the UE_A 10 may initiate the registration procedure, or may perform the registration procedure to thereby establish the 5GMM context.

In addition, in connection management, a CM state for each UE is managed. The CM state may be synchronized between the UE and the AMF. The CM state includes a non-connected state (CM-IDLE state) and a connected state (CM-CONNECTED state). In the CM-IDLE state, the UE is in the RM-REGISTERED state, but does not have NAS signaling connection established with the AMF via the N1 interface. In addition, in the CM-IDLE state, the UE has neither connection of the N2 interface (N2 connection) nor connection of the N3 interface (N3 connection). On the other hand, in the CM-CONNECTED state, the UE has NAS signaling connection established with the AMF via the N1 interface. In addition, in the CM-CONNECTED state, the UE may have connection of the N2 interface (N2 connection) and/or connection of the N3 interface (N3 connection).

Furthermore, in connection management, management may be performed separately for the CM state in 3GPP access and the CM state in non-3GPP access. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Note that the non-connected state may be referred to as an idle mode, and a connected state mode may be referred to as a connected mode.

Note that the CM state may be referred to as a 5GMM mode. In this case, the non-connected state may be referred to as a 5GMM non-connected mode (5GMM-IDLE mode), and the connected state may be referred to as a 5GMM connected mode (5GMM-CONNECTED mode). In addition, the non-connected state in 3GPP access may be referred to as a 5GMM non-connected mode in 3GPP access (5GMM-IDLE mode over 3GPP access), and the connected state in 3GPP access may be referred to as a 5GMM connected mode in 3GPP access (5GMM-CONNECTED mode over 3GPP access). In addition, the non-connected state in non-3GPP access may be referred to as a 5GMM non-connected mode in non-3GPP access (5GMM-IDLE mode over non-3GPP access), and the connected state in non-3GPP access may be referred to as a 5GMM connected mode in non-3GPP access (5GMM-CONNECTED mode over non-3GPP access). Note that the 5GMM non-connected mode may be referred to as an idle mode, and the 5GMM connected mode may be referred to as a connected mode.

In addition, one or more AMFs may be deployed within the core network_B. The AMF may be a Network Function (NF) that manages one or more Network Slice Instances (NSIs). In addition, the AMF may be a common CP function (Common Control Plane Network Function (CPNF)(CCNF)) shared among multiple NSIs.

Note that, in a case that the UE connects to the 5GS over non-3GPP access, the N3IWF is an apparatus and/or a function deployed between non-3GPP access and the 5GCN.

### 2.4. Apparatus Configuration of SMF

Next, an apparatus configuration example of the SMF will be described with reference to FIG. 5. The SMF includes a controller_B 700, a network connection unit_B 720, and a storage unit_B 740. The controller_B 700, the network connection unit_B 720, and the storage unit_B 740 are connected via a bus. The SMF may be a node that handles the control plane.

The controller_B 700 is a function unit that controls overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, with the use of the network connection unit_B 720, the SMF can transmit and/or receive user data and/or control information to and/or from the AMF, and/or the UPF, and/or the PCF, and/or the UDM.

To provide detailed description with reference to FIG. 2, by using of the network connection unit_A 620, the SMF in the 5GCN can communicate with the AMF over the N11 interface, can communicate with the UPF over the N4 interface, can communicate with the PCF over an N7 interface, and can communicate with the UDM over an N10 interface.

The storage unit_B 740 is a function unit that stores programs, user data, control information, and the like necessary for each operation of the SMF.

The SMF has a Session Management function for managing establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of signaling arrival of downlink data (Downlink Data Notification), a function of providing SM information specific to an AN (for each AN) that is transmitted to the AN through the AMF over the N2 interface, a function of determining a Session and Service Continuity mode (SSC mode) for a session, a roaming function, and the like.

### 2.5. Apparatus Configuration of UPF

Next, an apparatus configuration example of the UPF will be described with reference to FIG. 5. The UPF includes a controller_B 700, a network connection unit_B 720, and a storage unit_B 740. The controller_B 700, the network connection unit_B 720, and the storage unit_B 740 are connected via a bus. The UPF may be a node that handles the control plane.

The controller_B 700 is a function unit that controls overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB) within the 5G AN, and/or the SMF, and/or the DN. In other words, with the use of the network connection unit_B 720, the UPF can transmit and/or receive user data and/or control information to and/or from the base station apparatus (gNB) within the 5G AN, and/or the SMF, and/or the DN.

To provide detailed description with reference to FIG. 2, by using the network connection unit_A 620, the UPF within the 5GCN can communicate with the gNB over the N3 interface, can communicate with the SMF over the N4 interface, can communicate with the DN over an N6 interface, and can communicate with another UPF over an N9 interface.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be interconnected with the DN (that is, a function of transferring user data as a gateway between the DN and the core network_B), a function of routing and transferring packets, an Uplink Classifier (UL CL) function of supporting routing of multiple traffic flows for one DN, a Branching point function of supporting a multi-homed PDU session, a Quality of Service (QoS) processing function for the user plane, a function of verifying uplink traffic, a function of triggering buffering of downlink packets and Downlink Data Notification, and the like.

In addition, the UPF may be a gateway for IP communication and/or non-IP communication. In addition, the UPF may have a function of transferring IP communication, or a function of conversion between non-IP communication and IP communication. Furthermore, multiple deployed gateways may be gateways for connecting the core network_B and a single DN. Note that the UPF may have connectivity with another NF, and may be connected to each apparatus via another NF.

Note that a user plane refers to user data that is transmitted and/or received between the UE and a network. The user plane may be transmitted and/or received using a PDN connection or a PDU session. Furthermore, in a case of the EPS, the user plane may be transmitted and/or received using an LTE-Uu interface, and/or an S1-U interface, and/or an S5 interface, and/or an S8 interface, and/or an SGi interface. Furthermore, in a case of the 5GS, the user plane may be transmitted and/or received over the interface between the UE and the NG RAN, and/or the N3 interface, and/or the N9 interface, and/or the N6 interface. The user plane may be hereinafter referred to as a U-Plane.

In addition, a control plane refers to a control message that is transmitted and/or received in order to perform communication control of the UE or the like. The control plane may be transmitted and/or received using Non-Access-Stratum (NAS) signaling connection between the UE and the MME. In addition, in a case of the EPS, the control plane may be transmitted and/or received using the LTE-Uu interface and an S1-MME interface. Furthermore, in a case of the 5GS, the control plane may be transmitted and/or received using the interface between the UE and the NG RAN and the N2 interface. The control plane may be hereinafter referred to as a control plane, or may be hereinafter referred to as a C-Plane.

Furthermore, the U-Plane (User Plane (UP)) may be a communication path for transmitting and/or receiving user data, and may include multiple bearers. Furthermore, the C-Plane (Control Plane (CP)) may be a communication path for transmitting and/or receiving a control message, and may include multiple bearers.

### 2.6. Description of Other Apparatuses and/or Functions

Next, other apparatuses and/or functions will be described.

A network refers to at least some of the access network_B, the core network_B, and the DN. One or more apparatuses included in at least a part of the access network_B, the core network_B, and the DN may be referred to as a network or a network apparatus. In other words, "a network transmits and/or receives a message and/or performs processing" may mean "an apparatus (a network apparatus and/or a control apparatus) in the network transmits and/or receives the message and/or performs the processing". Conversely, "an apparatus in a network transmits and/or receives a message and/or performs processing" may mean "the network transmits and/or receives the message and/or performs the processing". The network may be referred to as a NW.

Furthermore, the network may indicate a Public Land Mobile Network (PLMN), or may indicate a Non-Public Network (NPN) to be described later. Furthermore, network selection may indicate PLMN selection, or may indicate SNPN selection.

A Network Data Analytics Function (NWDAF) may be an NF having a function of performing data collection from an NF and an application function (also referred to as an AF).

A Policy Control Function (PCF) may be an NF having a function of determining a policy for controlling a behavior of a network.

A Network Repository Function (NRF) may be an NF having a service discovery function. The NRF may be an NF that, in a case of receiving a discovery request of another NF from a certain NF, provides information of the discovered NF.

The Unified Data Management (UDM) may be an NF that includes an Authentication credential processing function, a user identification processing function, an access authentication function, a registration/mobility management function, a subscriber information management (subscription management) function, and the like.

The Session Management (SM) message may be a NAS message used in a procedure for SM. The SM message may be referred to as a Non-Access-Stratum (NAS) SM message. The SM message may be a control message transmitted and/or received between the UE_A 10 and an SMF_A 230 via an AMF_A 240. Furthermore, the SM message may include a PDU session establishment request message, a PDU session establishment accept message, a PDU session reject message (PDU session establishment reject message), a PDU session modification request message, a PDU session modification command message, a PDU session modification complete message (PDU session modification complete), a PDU session modification command reject message, a PDU session modification reject message, a PDU session release request message, a PDU session release reject message, a PDU session release command message, a PDU session release complete message, and the like.

An SM procedure (also referred to as a procedure for SM) may include a PDU session establishment procedure, a PDU session modification procedure, and a PDU session release procedure (UE-requested PDU session release procedure). Note that each procedure may be a procedure initiated by the UE, or may be a procedure initiated by the network.

The Mobility management (MM) message may be a NAS message used in a procedure for MM. The MM message may be referred to as a NAS MM message. The MM message may be a control message transmitted and/or received between the UE_A 10 and the AMF_A 240. Furthermore, the MM message may include a Registration request message, a Registration accept message, a Registration reject message, a De-registration request message, a De-registration accept message, a configuration update command message, a configuration update complete message, a Service request message, a Service accept message, a Service reject message, a Notification message, a Notification response message, and the like.

An MM procedure (also referred to as a procedure for MM) may include a Registration procedure, a De-registration procedure, a Generic UE configuration update procedure, an authentication and/or authorization procedure, a Service request procedure, a Paging procedure, and a Notification procedure.

A 5G System (5GS) service may be a connection service provided using the core network_B 190. In addition, the 5GS service may be a service different from an EPS service, or may be a service similar to the EPS service.

A non 5GS service may be a service other than the 5GS service and may include an EPS service and/or a non EPS service.

The S1 mode is a mode in which the UE_A 10 is allowed to access the EPC via the E-UTRAN. In other words, the S1 mode may be a mode in which a message is transmitted and/or received using an S1 interface. Note that the S1 interface may include an S1-MME interface and an S1-U interface.

The N1 mode is a mode in which the UE_A 10 is allowed to access the 5GC via the 5G access network. In other words, the N1 mode may be a mode in which a message is transmitted and/or received using an N1 interface.

An Access Point Name (APN) may be identification information for identifying the core network and/or an external network such as the PDN. Furthermore, the APN can also be used as information for selecting a gateway such as a PGW_A 30/UPF_A 235 for connecting to the core network A_90.

A Packet Data Network (PDN) type indicates a type of PDN connection and includes IPv4, IPv6, IPv4v6, and non-IP. In a case that IPv4 is specified, it indicates that transmission and/or reception of data is performed using IPv4. In a case that IPv6 is specified, it indicates that transmission and/or reception of data is performed using IPv6. In a case that IPv4v6 is specified, it indicates that transmission and/or reception of data is performed using IPv4 or IPv6. In a case that non-IP is specified, it indicates that communication is performed using a communication method other than the IP, not communication using the IP.

Although a Protocol Data Unit (PDU) session can be defined as a relationship between the DN that provides a PDU connectivity service and the UE, the PDU session may be connectivity established between the UE and an external gateway. In the 5GS, the UE establishes a PDU session via the access network_B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using the PDU session. Note that each apparatus (the UE, and/or the access network apparatus, and/or the core network apparatus) may associate one or more pieces of identification information with a PDU session for management. Note that these pieces of identification information may include one or more of a DNN, a QoS rule, a PDU session type, application identification information, NSI identification information, access network identification information, and an SSC mode, and may further include other pieces of information. In addition, in a case that multiple PDU sessions are established, pieces of identification information associated with the PDU sessions may have the same or different details.

The Data Network Name (DNN) may be identification information for identifying the core network and/or an external network such as the DN. Further, the DNN can also be used as information for selecting a gateway such as a PGW/UPF connecting the core network B 190. In addition, the DNN may correspond to an Access Point Name (APN).

A Protocol Data Unit (PDU) session type indicates a type of PDU session and includes IPv4, IPv6, Ethernet, and Unstructured. In a case that IPv4 is specified, it indicates that transmission and/or reception of data is performed using IPv4. In a case that IPv6 is specified, it indicates that transmission and/or reception of data is performed using IPv6. In a case that Ethernet is specified, it indicates that transmission and/or reception of an Ethernet frame is performed. Alternatively, Ethernet may indicate that communication using the IP is not performed. In a case that Unstructured is specified, it indicates that data is transmitted and/or received to and/or from an application server in the DN or the like by using a Point-to-Point (P2P) tunneling technique. For the P2P tunneling technique, for example, a UDP/IP encapsulation technique may be used. Note that the PDU session type may include the IP, in addition to the above. The IP can be specified in a case that the UE can use both of IPv4 and IPv6.

The Public land mobile network (PLMN) is a communication network that provides mobile radio communication services. The PLMN is a network managed by an operator who is a network operator, and the operator can be identified by a PLMN ID. A PLMN that matches a Mobile Network Code (MNC) and a Mobile Country Code (MCC) of an International Mobile Subscription Identity (IMSI) of the UE may be a Home PLMN (HPLMN). Furthermore, the UE may hold, in the USIM, an Equivalent PLMN list for identifying one or multiple Equivalent PLMNs (EPLMNs). A PLMN different from the HPLMN and/or the EPLMN may be a VPLMN (Visited PLMN). A PLMN with which the UE has successfully registered may be a Registered PLMN (RPLMN).

A registered PLMN is a PLMN with which the UE has registered.

An equivalent PLMN is a PLMN that is treated as the same PLMN as any PLMN in a network. For example, an equivalent PLMN may be one or more PLMNs that are treated the same as a registered PLMN.

PLMN selection may be a procedure for the UE to select a PLMN. Here, PLMN selection may be performed in a case that the UE connects to a PLMN. Here, PLMN selection may be referred to as a PLMN selection process, or may be referred to as a PLMN selection procedure.

Here, the UE not operating in an SNPN access mode or an SNPN access operation mode may perform PLMN selection. The UE operating in the SNPN access mode or the SNPN access operation mode need not perform PLMN selection. PLMN selection may be performed without registration. In other words, PLMN selection may be performed in a case that the UE has not completed registration with the network. PLMN selection may include an automatic PLMN selection mode and a manual PLMN selection mode. Note that PLMN selection may indicate the automatic PLMN selection mode, or may indicate the manual PLMN selection mode.

A tracking area is a single or multiple ranges that can be expressed using location information of the UE_A 10 managed by the core network. Note that the tracking area may include multiple cells. Furthermore, the tracking area may be a range in which a control message such as paging is broadcast, or may be a range in which the UE_A 10 can move without performing a handover procedure. Furthermore, the tracking area may be a routing area, may be a location area, or may be any area similar to these. The tracking area may be hereinafter a Tracking Area (TA). The tracking area may be identified by a Tracking Area Identity (TAI) including a Tracking area code (TAC) and a PLMN.

The Registration area is a set of one or multiple TAs allocated to the UE by the AMF. Note that, while moving within one or multiple TAs included in a registration area, the UE_A 10 may be able to move without transmitting and/or receiving a signal for updating the tracking area. In other words, the registration area may be an information group indicating an area in which the UE_A 10 can move without performing a tracking area update procedure. The registration area may be identified by a TAI list configured by one or multiple TAIs.

A UE ID is information for identifying the UE. For example, the UE ID may be a SUCI, a SUPI, an IMSI, a GUTI, a 5G-GUTI, an IMEI, an IMEISV, a TMSI, or a 5G-S-TMSI. Alternatively, the UE ID may be other information configured by an application or within the network. Moreover, the UE ID may be information for identifying the user.

The Subscription Concealed Identifier (SUCI) may be a privacy preserving identifier including a concealed SUPI. The SUCI may include a SUPI Type, a Home Network Identifier, a Routing Indicator, a Protection Scheme Id, a Home Network Public Key Identifier, and a Scheme Output.

The Sbuscription Permanent Identifier (SUPI) may be a globally unique identifier allocated to each subscriber in the 5G system. The SUPI may be defined as a SUPI type and an IMSI, an NSI, a Global Cable Identifier (GCI), or a Global Line Identifier (GLI). The SUPI type may indicate an IMSI, an NSI, a GCI, or a GLI. In other words, in a case that the SUPI type indicates an IMSI, the SUPI may include a SUPI type indicating the IMSI and the IMSI. Similarly, in a case that the SUPI type indicates an NSI, the SUPI may include a SUPI type indicating the NSI and the NSI. In a case that the SUPI type indicates a GCI, the SUPI may include a SUPI type indicating the GCI and the GCI. In a case that the SUPI type indicates a GLI, the SUPI may include a SUPI type indicating the GLI and the GLI.

The International Mobile Subscription Identity (IMSI) may include a Mobile Contry Code (MCC), a Mobile Network Code (MNC), and a Mobile Subscriber Identification Number (MSIN).

The 5G Globally Unique Temporary Identifier (5G-GUTI) may be information for providing an unambiguous identifier of the UE, which does not reveal the UE or the user's permanent identity. The 5G-GUTI may be information that also allows identification of the AMF and the network. The 5G-GUTI may be information used by the network and the UE to establish identity of the UE. The 5G-GUTI may include two elements for identifying the AMF to which the 5G-GUTI is allocated and for uniquely identifying the UE in the AMF to which the 5G-GUTI is allocated. The former may be a Glovally Unique AMF Identifier (GUAMI), and the latter may be a 5G-Temporary Mobile Subscriber Identity (5G-TMSI). In other words, the 5G-GUTI may include the GUAMI and the 5G-TMSI.

The International Mobile station Equipment Identity (IMEI) may include a Type Allocation Code (TAC), a Serial Number (SNR), and a Check Digit (CD)/Spare Digit (SD).

The International Mobile station Equipment Identity and Software Version number (IMEISV) may include a Type Allocation Code (TAC), a Serial Number (SNR), and a Software Version Number (SVN).

The 5G S-Temporary Mobile Subscription Identifier (5G-S-TMSI) may be an abbreviation of the 5G-GUTI. The 5G-S-TMSI may enable a more efficient radio signaling procedure (for example, paging (also referred to as a paging procedure) and a service request (also referred to as a service request procedure)). For paging, the UE may be paged using the 5G-S-TMSI. The 5G-S-TMSI may include an AMF Set ID, an AMF Pointer, and a 5G-TMSI.

The Media Access Control address (MAC address) may be a hardware address of a device connected to shared media. The MAC address may be a unique identification number given to the UE or the network apparatus.

An IEEE Extended Unique Identifier (EUI-64) may be a 64-bit long identifier standardized by the IEEE. The EUI-64 may be used in a case of automatically generating an IPv6 address.

A Permanent Equipment Identifier (PEI) may be information for identifying the UE. The PEI may be defined as a PEI type, an IMEI, an IMEISV, a MAC address, or an EUI-64. Here, the PEI type may indicate the IMEI, the IMEISV, the MAC address, or the EUI-64. In other words, in a case that the PEI type indicates an IMEI, the PEI may include a PEI type indicating the IMEI and the IMEI. Similarly, in a case that the PEI type indicates an IMEISV, the PEI may include a PEI type indicating the IMEISV and the IMEISV. In a case that the PEI type indicates a MAC address, the PEI may include a PEI type indicating the MAC address and the MAC address. In a case that the PEI type indicates a EUI-64, the PEI may include a PEI type indicating the EUI-64 and the EUI-64.

A 5GS mobile identity may be an IE for providing a SUCI, a 5G-GUTI, an IMEI, an IMEISV, a 5G-S-TMSI, a MAC address, and an EUI-64. The 5GS mobile identity may be referred to as a 5GS mobile identity information element (IE).

The Non-Public Network (NPN) is a private network used by specific users for specific purposes. As NPNs, two types of NPNs, namely a Stand-alone Non-Public Network (SNPN) and a Public Network Integrated NPN (PNI-NPN), are present. Note that the NPN may indicate an SNPN, may indicate a PNI-NPN, or may indicate both.

The SNPN is a network that is operated by an NPN operator and not affected by functional units provided by a PLMN. In other words, the SNPN is an NPN-only network independent of publicly available PLMNs. The SNPN may be a network identified by an SNPN identity (SNPN ID). Note that the SNPN ID may be information that is a combination of a PLMN ID and a Network identifier (NID). Note that the PLMN ID used for the SNPN ID may be information reserved for a private network. For example, the MCC included in the PLMN ID may be 999. Furthermore, in a case that the UE is registered with the SNPN, the registered SNPN may be referred to as a registered SNPN or an RSNPN (registered SNPN).

The NID is information for identifying a network. The SNPN may be identified by information that is a combination of the PLMN ID and the NID. The NID may be unique information in the SNPN, or may be globally unique information.

The PNI-NPN is a network implemented using functional units of the PLMN. In other words, the PNI-NPN is an NPN virtually implemented in the PLMN. Furthermore, the PNI-NPN is an NPN that can be created via the PLMN. Note that the PNI-NPN may be implemented using a function of a network slice. Specifically, the PNI-NPN may be a network that can be implemented by using a network slice allocated for the NPN. In this case, the PNI-NPN may be identified by S-NSSAI, or may be identified by a combination of S-NSSAI and a CAG ID. Furthermore, the PNI-NPN may be implemented using the DN. Specifically, the PNI-NPN may be a network that can be implemented by using the DN for the NPN. In this case, the PNI-NPN may be identified by a DNN, or may be identified by a combination of a DNN and a CAG ID.

The Closed Access Groups (CAG) are groups used in a case of implementing a PNI-NPN. The CAG may be a group identified by the CAG ID. The CAG may be used to prevent UEs not allowed by an NPN from attempting to access a network slice allocated for the NPN.

The CAG ID is information for identifying the CAG in the PLMN. Furthermore, the CAG ID is a unique identifier in the PLMN.

An SNPN enable UE may be the UE that can use the SNPN. The SNPN enable UE may store at least one piece of information regarding the SNPN. In other words, configuration information of the SNPN enable UE may include information indicating that the SNPN is available. Furthermore, the SNPN enable UE may support an SNPN access mode or an SNPN access operation mode. In other words, the SNPN enable UE may operate in the SNPN access mode or the SNPN access operation mode.

The SNPN access mode may be a mode for the UE to select the SNPN. The SNPN access mode may be a mode in which the UE has registered with the SNPN. Furthermore, the SNPN access mode may also be a mode in which the UE has been connected to the SNPN. In other words, the UE operating in the SNPN access mode may select only the SNPN in a case of network selection. More specifically, the UE operating in the SNPN access mode may select only the SNPN via a Uu interface in a case of network selection. In other words, the UE operating in the SNPN access mode may select the SNPN without selecting the PLMN in a case of network selection. Here, the UE operating in the SNPN access mode may be referred to as the UE in the SNPN access mode. Furthermore, the UE in the SNPN access mode may be the SNPN enable UE.

The SNPN access operation mode is the SNPN access mode or a mode of connecting to an SNPN via non-3GPP access. Here, "non-3GPP access" in the SNPN may refer to a case that the UE is connected to the SNPN via the PLMN. The UE may also operate in the SNPN access operation mode in a case that the UE operates in the SNPN access mode. The UE may also not operate in the SNPN access operation mode in a case that the UE does not operate in the SNPN access mode. Furthermore, the UE in the SNPN access mode may also be the UE in the SNPN access operation mode. Note that the SNPN access operation mode may be interpreted as the SNPN access mode.

SNPN selection may be a procedure for the UE to select the SNPN. SNPN selection may be a procedure performed in a case that the UE connects to the SNPN. SNPN selection may be referred to as an SNPN selection process, or may be referred to as an SNPN selection procedure. SNPN selection may be a process for the UE to select the SNPN. SNPN selection may be a process performed in a case that the UE connects to the SNPN.

The UE operating in the SNPN access mode or the SNPN access operation mode may perform SNPN selection. The UE not operating in the SNPN access mode or the SNPN access operation mode need not perform SNPN selection. SNPN selection may include an automatic SNPN selection mode and a manual SNPN selection mode. SNPN selection may be performed without registration. In other words, SNPN selection may be performed in a case that the UE has not completed registration with the network. Note that SNPN selection may indicate the automatic SNPN selection mode, or may indicate the manual SNPN selection mode.

An equivalent SNPN (equivalent PLMN) may be an SNPN that is treated the same as any SNPN. For example, an equivalent SNPN may be one or more SNPNs that are treated the same as a registered SNPN. Furthermore, an equivalent SNPN may refer to a PLMN that is treated as the same SNPN as any SNPN. For example, an equivalent SNPN may be one or more PLMNs treated the same as a registered SNPN.

Furthermore, an equivalent SNPN may also be one or more SNPNs or PLMNs identified by the same PLMN ID as any SNPN. For example, an equivalent SNPN may be one or more SNPNs or PLMNs identified by the same PLMN ID as a registered SNPN. Furthermore, an equivalent SNPN may also be a PLMN identified by the same PLMN ID as a registered SNPN and a PLMN equivalent to the PLMN.

SOR is an abbreviation of Steering of Roaming and means a method and a technique by which the UE is promoted to roam the network as a prioritized roaming destination (or recommended roaming destination) indicated by the HPLMN.

Steering of roaming connected mode control information (SOR-CMCI) is HPLMN information for controlling a timing at which the UE transitions from the 5GMM connected mode to the 5GMM non-connected mode to perform the SOR. The SOR-CMCI may be included in SOR information and/or SOR transparent container or may be transmitted and/or received by being included in another information element.

The SOR-CMCI may be information that allows the network such as the HPLMN to control a timing at which the UE in a connected mode transitions to a non-connected mode for the SOR. The SOR-CMCI may be information based on an operator policy and/or an HPLMM policy. The SOR-CMCI may be information configured for each apparatus or may be information provided as a notification from the NW to the UE.

The SOR-CMCI may be information provided by a Steering of Roaming application function (SOR application function (SOR-AF)). The SOR-CMCI may be information provided for the UE by the SOR-AF via the UDM and the AMF.

The SOR-CMCI may be included in a secured packet. The SOR-CMCI may be included in SOR information.

The SOR-CMCI may include one or more SOR-CMCI rules.

The SOR-CMCI rule may include one piece of criteria information and one first timer value. Furthermore, the criteria information and the first timer value may be associated with each other. Here, the criteria information may be referred to as a criterion.

Here, the criteria information may include a criterion pertaining to a PDU session (PDU session attribute type criterion), and/or a criterion related to a service type (service type criterion), and/or an SOR security check criterion, and/or a criterion pertaining to all the types (match all type criterion). The criteria information may include a criterion related to localized services.

Here, the criterion related to the localized services may be a criterion in a case that the localized services are used. The criterion related to the localized services may be a criterion used in a case of connecting to the hosting network. The criterion related to the localized services may be simply referred to as the localized services.

Furthermore, the criterion pertaining to the PDU session may be criteria information for identifying the PDU session. Specifically, the criterion pertaining to the PDU session may include the DNN of the PDU session, or the S-NSSAI STT of the PDU session, or the S-NSSAI STT and SD of the PDU session (S-NSSAI SST and SD of the PDU session). The criterion pertaining to the PDU session may include the criterion related to the localized services.

Furthermore, the criterion related to the service type may be criteria information for identifying the service. Specifically, the criterion related to the service type may include IMS registration related signalling, or an MMTEL voice call, or an MMTEL video call, or an SMS over NAS or SMSoIP. The criterion related to the service type may include the criterion related to the localized services.

Furthermore, the SOR security check criterion may include SOR security check not successful. The SOR security check criterion may include the criterion related to the localized services.

Furthermore, the criterion pertaining to all the types may be criteria information matching any state. The criterion pertaining to all the types may include the criterion related to the localized services.

In a case that multiple PDU sessions are established, multiple SOR-CMCI rules may be included in the SOR-CMCI. Furthermore, also in a case that multiple services are performed, multiple SOR-CMCI rules may be included.

Steering of roaming information (SOR information) may be information of the SOR including information protected by the HPLMN. The SOR information may include information indicating whether to request acknowledgement (Ack) that is a response indicating successful reception of the Steering of roaming information from the UE.

The SOR information may include information indicating a list of combinations of recommended (or prioritized) PLMNs and access technologies and indicating that it (the list) is included, or information indicating a packet is secured and indicating that it (the packet) is included, and information indicating that the information indicating the lists of the combinations of the recommended PLMNs and the access technologies is not included in the SOR information since there is no need to change the list of the combinations of the recommended PLMNs and the access technologies stored in the UE.

The SOR information and Ack that is a response indicating that the UE has successfully received the SOR information may be transmitted and/or received by being included in the SOR transparent container information element included in the NAS message.

Each apparatus may manage and/or store multiple pieces of SOR-CMCI for the UE or may manage and/or store one piece of SOR-CMCI.

A first timer is a timer for determining a timing at which the UE in the connected mode transitions to the non-connected mode for the SOR. The first timer may be a Tsor-cm timer in 3GPP. The first timer may be managed by the UE and/or the NW. The first timer may be managed for each PDU session, may be managed for each access type, may be managed for each combination of the PDU session and the access type, may be managed for each service type, may be managed for each PLMN, or may be managed for each UE. The timer value to be set for the first timer may be referred to as a first timer value.

In other words, one or more first timers may be managed for one UE, or one first timer may be managed for one UE. The first timer managed by the UE may store a PDU session ID and/or information indicating an access type and/or information indicating a combination of a PDU session and an access type and/or a service type and/or a PLMN ID in an associated manner.

The first timer value may be associated with each criterion. The first timer value may indicate wait time of the UE before entering an idle state after releasing a PDU session or a service. The first timer value may be a value for the Tsor-cm timer.

A criterion with which a selected timer value is associated based on the SOR-CMCI used in selecting the timer value to be set for the first timer and/or information belonging to a PDU session included in the criterion and/or information indicating a service type included in the criterion and/or information indicating the priority with which the criterion is associated may be managed in an associated manner with the first timer and/or the first timer value.

The PDU session identified by the information with which the first timer is associated or the PDU session using the information with which the first timer is associated may be referred to as a PDU session associated with the first timer, and the service identified by the information with which the first timer is associated may be referred to as a service associated with the first timer.

Note that the expression that the first timer is managed here means that the first timer is started and/or stopped and/or expired and/or run. In other words, the expression that the UE and/or the NW manages the first timer means that the UE and/or the NW starts and/or stops and/or expires and/or runs the first timer, and a state where the UE and/or the NW is managing the first timer means that the UE and/or the NW is running the first timer.

For example, in a state where multiple PDU sessions are being established, the UE and/or the NW may manage the first timer for each PDU session or manage only one first timer.

Furthermore, in a case that the UE and/or the NW establishes a first PDU session and a second PDU session on the 3GPP access and establishes a third PDU session and a fourth PDU session on the non-3GPP access, the UE and/or the NW may manage the first timer associated with the 3GPP access and the first timer associated with the non-3GPP access or may manage multiple first timers associated with each of the first to fourth PDU sessions at the same time.

Furthermore, in a case that the UE and/or the NW establishes an MA PDU session that establishes user plane resources on both the 3GPP access and the non-3GPP access, the UE and/or the NW may manage the first timer associated with the MA PDU session or may manage the first timer associated with the 3GPP access and the first timer associated with the non-3GPP access at the same time.

A "temporarily forbidden SNPNs" list may be independently managed for each access type. In other words, the "temporarily forbidden SNPNs" list may be managed for each 3GPP access or non-3GPP access. The "temporarily forbidden SNPNs" list may be a list of SNPNs to which the UE cannot temporarily access. In a case that the UE supports onboarding services in the SNPN, an additional "temporarily forbidden SNPNs" list for onboarding services may be managed.

In a case that the UE supports localized services, an additional "temporarily forbidden SNPNs" list for the localized services may be managed.

A "permanently forbidden SNPNs" list may be independently managed for each access type. In other words, the "permanently forbidden SNPNs" list may be managed for each 3GPP access or non-3GPP access. The "permanently forbidden SNPNs" list may be a list of SNPNs to which the UE cannot permanently access. In a case that the UE supports onboarding services in the SNPN, an additional "permanently forbidden SNPNs" list for onboarding services may be managed.

In a case that the UE supports localized services, an additional "permanently forbidden SNPNs" list for the localized services may be managed.

The UE may not be able to initiate the registration procedure for the SNPNs in the "temporarily forbidden SNPNs" list or the "permanently forbidden SNPNs" list.

The list of SNPNs temporarily forbidden for the localized services may be used in a case that the UE supports the localized services. The list of SNPNs temporarily forbidden for the localized services may be the additional "temporarily forbidden SNPNs" list for the localized services. The list of SNPNs temporarily forbidden for the localized services may be a list of SNPNs providing the localized services to which the UE cannot temporarily access.

The list of SNPNs temporarily forbidden for the localized services may be independently managed for each access type. In other words, the list of SNPNs temporarily forbidden for the localized services may be managed for each 3GPP access or non-3GPP access.

The list of SNPNs permanently forbidden for the localized services may be used in a case that the UE supports the localized services. The list of SNPNs permanently forbidden for the localized services may be the additional "permanently forbidden SNPNs" list for the localized services. The list of SNPNs permanently forbidden for the localized services may be a list of SNPNs providing the localized services to which the UE cannot permanently access.

The list of SNPNs permanently forbidden for the localized services may be independently managed for each access type. In other words, the list of SNPNs permanently forbidden for the localized services may be managed for each 3GPP access or non-3GPP access.

A list of forbidden hosting networks may be used in a case that the UE supports the localized services. The list of forbidden hosting networks may be a list of hosting networks to which the UE cannot access.

The list of forbidden hosting networks may be independently managed for each access type. In other words, the list of forbidden hosting networks may be managed for each 3GPP access or non-3GPP access.

The list of forbidden hosting networks may be managed as a list of temporarily forbidden hosting networks and/or a list of permanently forbidden hosting networks.

The localized services may be services provided in a specific/limited area. The localized services may be limited by time. The localized services may be referred to as local services. The localized services may be implemented via an application such as a live, or on-demand audio, or a video stream, or a video game, or an IMS. The localized services may be implemented via connectivity, such as from a UE to another UE, or from a UE to a DN.

The localized services may be interpreted as a hosting network. The localized services may be interpreted as the hosting network. The localized services being supported may be interpreted as the hosting network being supported.

A localized service provider may be an application provider or a network operator that localizes services and provides the services to end users via the hosting network. The localized service provider may be an application provider or a network operator that provides the localized services. The localized service provider may be the DN. The localized service provider may be the core network.

The hosting network may be a network that provides access for the localized services. The hosting network may be the NPN. Here, the NPN may be the SNPN, or may be the PNI-NPN.

The hosting network may be interpreted as the localized services. The hosting network being supported may be interpreted as the localized services being supported.

The home network may be a network that owns a subscription or a credential of the UE being currently used. The home network may be the PLMN, or may be the NPN. Here, the NPN may be the SNPN or the PNI-NPN.

A home network service may be a service provided to the UE, based on a subscription agreed with a home network operator. The home network service may be a service provided by the home network.

### 2.7. Description of Identification Information according to Present Embodiment

Next, the identification information transmitted and/or received, and/or stored, and/or managed by each apparatus in the present embodiment will be described.

First, 1st identification information is information for identifying the SNPN. The 1st identification information may be the SNPN ID. The 1st identification information may be information that is a combination of the PLMN ID and the NID. Here, the PLMN ID may include the MCC and the MNC. Furthermore, the PLMN ID may be information in the 5GS mobile identity.

Next, 2nd identification information may be information indicating whether to support the Closed Access Group (CAG). The 2nd identification information may be information indicating support of the CAG. The 2nd identification information may be information indicating non-support of the CAG. The 2nd identification information may be the 5GMM capability. The 2nd identification information may be information included in the 5GMM capability.

Next, 3rd identification information may be information indicating whether to support the hosting network. The 3rd identification information may be information indicating support of the hosting network. The 3rd identification information may be information indicating non-support of the hosting network. The 3rd identification information may be the 5GMM capability. The 3rd identification information may be information included in the 5GMM capability.

The 3rd identification information may be information indicating whether to support the localized services. The 3rd identification information may be information indicating support of the localized services. The 3rd identification information may be information indicating non-support of the localized services.

The 3rd identification information may be information indicating a request for use of the hosting network. In other words, the 3rd identification information may be information indicating a request for access to the hosting network. The 3rd identification information may be information indicating a request for use of the localized services. In other words, the 3rd identification information may be information indicating a request for access for the localized services.

The 3rd identification information may be information indicating a request for authentication and/or authorization from the hosting network. The 3rd identification information may be information indicating a request for authentication and/or authorization from the localized services.

Next, 10th identification information is the SOR-CMCI. The 10th identification information may include one or more pieces of 11th identification information, and/or 12th identification information, and/or 13th identification information.

Next, 11th identification information is the SOR-CMCI rule. The 11th identification information may include one piece of 12th identification information and one piece of 13th identification information. The 11th identification information may be information included in the 10th identification information.

Next, 12th identification information is the criterion. The 12th identification information may be information included in the 10th identification information and/or the 11th identification information.

The 12th identification information may include the criterion pertaining to the PDU session (PDU session attribute type criterion), and/or the criterion related to the service type (service type criterion), and/or the SOR security check criterion, and/or the criterion pertaining to all the types (match all type criterion). The criteria information may include the criterion related to the localized services.

Here, the criterion related to the localized services may be a criterion in a case that the localized services are used. The criterion related to the localized services may be a criterion used in a case of connecting to the hosting network. The criterion related to the localized services may be referred to as a criterion indicating the localized services. The criterion related to the localized services may be simply referred to as the localized services.

Furthermore, the criterion pertaining to the PDU session may be criteria information for identifying the PDU session. Specifically, the criterion pertaining to the PDU session may include the DNN of the PDU session, or the S-NSSAI STT of the PDU session, or the S-NSSAI STT and SD of the PDU session (S-NSSAI SST and SD of the PDU session). The criterion pertaining to the PDU session may include the criterion related to the localized services.

Furthermore, the criterion related to the service type may be criteria information for identifying the service. Specifically, the criterion related to the service type may include IMS registration related signalling, or an MMTEL voice call, or an MMTEL video call, or an SMS over NAS or SMSoIP. The criterion related to the service type may include the criterion related to the localized services.

Furthermore, the SOR security check criterion may include SOR security check not successful. The SOR security check criterion may include the criterion related to the localized services.

Furthermore, the criterion pertaining to all the types may be criteria information matching any state. The criterion pertaining to all the types may include the criterion related to the localized services.

Next, 13th identification information is the first timer value. The 13th identification information may be information included in the 10th identification information and/or the 11th identification information.

In other words, the 13th identification information may be a timer value of the Tsor-cm timer. The 13th identification information may be associated with the 12th identification information. The 13th identification information may indicate wait time of the UE before entering the idle state after releasing the PDU session or the service.

The 13th identification information may be a value different for each UE.

The 13th identification information may be a value different for each group of multiple UEs. In other words, the 13th identification information may be a value different for each UE group including one or more UEs. For example, in a case that UE 1, UE 2, UE 3, and UE 4 are present, UE group 1 includes UE 1 and UE 2, and UE group 2 includes UE 3 and UE 4, the 13th identification information for UE 1 and UE 2 (or UE group 1) may be timer value 1, and the 13th identification information for UE 3 and UE 4 (or UE group 2) may be timer value 2. In other words, the 13th identification information may be information including multiple timer values.

Next, 14th identification information may be a cause value indicating that the localized services have ended. In other words, the 14th identification information may be a cause value indicating that the localized services are no longer available. The 14th identification information may be a 5GMM cause value (also referred to as a 5GMM cause value). The 14th identification information may be information included in the 5GMM cause value.

The 14th identification information may be a cause value indicating that the hosting network has stopped. In other words, the 14th identification information may be a cause value indicating that the hosting network is no longer available.

Next, 15th identification information may be information indicating a range of registration wait time. The 15th identification information may be a registration wait range. Here, the 15th identification information may include minimum registration wait time and maximum registration wait time.

The 15th identification information may be information indicating a range of wait time until returning to the home network. Here, the 15th identification information may include a minimum value and a maximum value.

The UE may generate a random numerical value within a range of the minimum value and the maximum value of the 15th identification information. The numerical value generated using the 15th identification information may be used as a timer value. In other words, the UE may start a timer, using the timer value being a numerical value generated using the 15th identification information.

Next, 16th identification information is a timer value. The 16th identification information may be a timer value indicating time in which the MM procedure including the registration procedure is not initiated. For example, while running the timer using the timer value indicated by the 16th identification information, the UE may not be able to initiate the MM procedure including the registration procedure. Furthermore, based on expiration of the timer using the timer value indicated by the 16th identification information, the UE may initiate the MM procedure including the registration procedure.

The 16th identification information may indicate time. Specifically, the 16th identification information may indicate time at which the MM procedure is not initiated. For example, the UE may not be able to initiate the MM procedure until the time indicated by the 16th identification information, and the UE may be able to initiate the MM procedure after the time indicated by the 16th identification information passes.

Next, the 17th identification information may be a cause value indicating not authorized for the hosting network. The 17th identification information may be the 5GMM cause value. The 17th identification information may be information included in the 5GMM cause value.

The 17th identification information may be a cause value indicating that the localized services are not allowed. In other words, the 17th identification information may be a cause value indicating that connection to the hosting network is not allowed.

Next, 18th identification information may be a cause value indicating temporarily not authorized for the SNPN. The 18th identification information may be #74 (Temporarily not authorized for this SNPN). The 18th identification information may be the 5GMM cause value. The 18th identification information may be information included in the 5GMM cause value.

Next, 19th identification information may be a cause value indicating permanently not authorized for the SNPN. The 19th identification information may be #75 (Permanently not authorized for this SNPN). The 19th identification information may be the 5GMM cause value. The 19th identification information may be information included in the 5GMM cause value.

Next, 20th identification information may be a list including one or more CAG IDs. The 20th identification information may be a CAG information list. The 20th identification information may be an Extended CAG information list.

The 20th identification information may be a list including one or more CAG IDs for the localized services. The 20th identification information may be a CAG information list for the localized services. The 20th identification information may be an extended CAG information list for the localized services.

The 20th identification information may be a list including one or more CAG IDs for the hosting network. The 20th identification information may be a CAG information list for the hosting network. The 20th identification information may be an extended CAG information list for the hosting network.

Next, 21st identification information may be a cause value indicating not authorized for the CAG or authorized only for CAG cells. The 21st identification information may be #76 (Not authorized for this CAG or authorized for CAG cells only). The 21st identification information may be the 5GMM cause value. The 21st identification information may be information included in the 5GMM cause value.

Next, 22nd identification information may be a list including identifiers of available hosting networks. The 22nd identification information may be a list including the SNPN IDs and/or the CAG IDs. Here, the hosting network may be the NPN. In other words, the hosting network may be the SNPN, or may be the PNI-NPN.

Next, 23rd identification information may be a list including identifiers of unavailable hosting networks. The 23rd identification information may be a list including the SNPN IDs and/or the CAG IDs. Here, the hosting network may be the NPN. In other words, the hosting network may be the SNPN, or may be the PNI-NPN.

### 3. Description of Procedures Used in Each Embodiment

Next, procedures used in each embodiment will be described. Note that the procedures used in each embodiment include a Registration procedure, a UE-initiated de-registration procedure, a Network-initiated de-registration procedure, a UE-initiated NAS transport procedure, and a Network-initiated NAS transport procedure. Each procedure will be described below.

Note that, in each embodiment, a case that each of the HSS and the UDM, the PCF and the PCRF, the SMF and the PGW-C, and the UPF and the PGW-U is configured as a single apparatus (that is, the same physical hardware, or the same logical hardware, or the same software) as illustrated in FIG. 2 will be described as an example. However, the details described in the present embodiment can also be applied to a case that each of the combinations is configured as different apparatuses (that is, different pieces of physical hardware, or different pieces of logical hardware, or different pieces of software). For example, between the apparatuses/functions, data may be directly transmitted and/or received, data may be transmitted and/or received via an N26 interface between the AMF and the MME, or data may be transmitted and/or received via the UE.

### 3.1. Registration Procedure

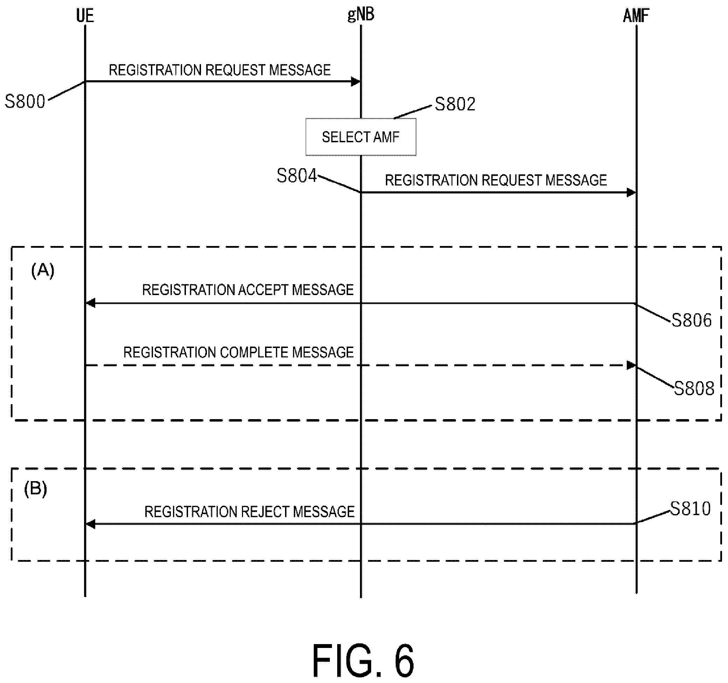

First, the Registration procedure will be described with reference to FIG. 6. The registration procedure is a procedure in the 5GS. In the present section, the present procedure refers to the registration procedure. The registration procedure is a procedure for registration with the access network_B, and/or the core network_B, and/or the DN initiated by the UE. In a case that the UE is in a state of not being registered with the network, for example, the UE can perform the present procedure at any timing, for example, a power input time. In other words, the UE can initiate the present procedure at any time as long as the UE is in a deregistered state (an RM-DEREGISTERED state). Each of the apparatuses (especially, the UE and the AMF) can transition to a registered state (an RM-REGISTERED state) based on completion of the Registration procedure. Note that the registered state may be managed by each apparatus for each access. Specifically, each apparatus may independently manage the registration state (registered state or deregistered state) for 3GPP access and the registration state for non-3GPP access.

Note that the registration procedure may be a Registration procedure for initial registration. The registration procedure may be a Registration procedure for mobility and periodic registration update.

In addition, the registration procedure may be a procedure for updating position registration information of the UE on the network, and/or periodically provide notification of the state of the UE from the UE to the network, and/or updating a specific parameter related to the UE on the network.

The present procedure may be a registration procedure for localized services, or may be a registration procedure for the hosting network.

The UE may also initiate a registration procedure in a case that the UE has performed mobility across a TA. In other words, the UE may initiate a registration procedure in a case that the UE has moved to a TA different from TAs indicated in a stored TA list. In addition, the UE may initiate the registration procedure in a case that a context of each apparatus needs to be updated due to disconnection and/or invalidation of a PDU session. Furthermore, in a case that there has been a change in capability information and/or a preference, related to PDU session establishment of the UE, the UE may initiate the registration procedure. In addition, the UE may periodically initiate the registration procedure. Furthermore, the UE may also initiate a registration procedure based on completion of a UE configuration update procedure. Note that the UE is not limited to this configuration, and can perform the registration procedure at any timing.

Furthermore, the UE may also initiate a registration procedure periodically even in a registered state.

Note that the registration procedure performed based on the mobility of the UE and the registration procedure performed periodically may also be expressed as a registration procedure for mobility and registration update. In other words, the registration procedure for mobility and registration update may be a registration procedure performed based on the mobility of the UE or may be a registration procedure performed periodically. Furthermore, the registration procedure for mobility and registration update may also be a registration procedure performed based on configuration update of the UE. Furthermore, the registration procedure for mobility and registration update may also be a registration procedure performed to establish a communication path for transmitting and/or receiving user data. Furthermore, the registration procedure for mobility and registration update may also be a registration procedure performed based on a request from the network. Furthermore, in other words, the registration procedure for mobility and registration update may be a registration procedure other than a registration procedure for initial registration.

Next, each step of the registration procedure will be described. Note that the registration procedure described below may be a registration procedure for initial registration or a registration procedure for mobility and registration update.

First, the UE transmits a Registration request message to the AMF (S800) (S802) (S804) to initiate the registration procedure. Specifically, the UE transmits an RRC message including a registration request message to the 5G AN (or the gNB) (S800). Note that the registration request message is a NAS message. The RRC message may be a control message transmitted and/or received between the UE and the 5G AN (or the gNB). In addition, the NAS message is processed in the NAS layer, and the RRC message is processed in the RRC layer. Note that the NAS layer is a layer higher than the RRC layer.

Here, the UE may transmit a registration request message and/or an RRC message including one or more pieces of identification information out of the 1st identification information to the 3rd identification information. More specifically, the UE can transmit a registration request message and/or an RRC message including one or more pieces of identification information out of the 1st identification information to the 3rd identification information and may also transmit a control message different from such messages, for example, a control message of a layer below the RRC layer (e.g., the MAC layer, the RLC layer, or the PDCP layer), including the one or more pieces of identification information.

Note that the UE may transmit these pieces of identification information, to thereby indicate that the UE supports each function or indicate the request of the UE to the network. In addition, in a case that multiple pieces of identification information are transmitted and/or received, two or more pieces of identification information of these pieces of identification information may be configured as one or more pieces of identification information. Note that information indicating support of each function and information indicating a request for use of each function may be transmitted and/or received as the same piece of identification information, or may be transmitted and/or received as different pieces of identification information.

Further, by transmitting the registration request message including one or more pieces of identification information out of the 1st identification information to the 3rd identification information, the UE may indicate, to the network, the content indicated by the identification information included in the registration request message.

Note that the UE may select or determine whether to include, in the registration request message, one or more pieces of identification information out of the 1st identification information to the 3rd identification information based on subscriber information, a network state, user registration information, a context held by the UE, and/or the like.

Note that the UE may transmit the registration request message including identification information other than the 1st identification information to the 3rd identification information.

In case of receiving the RRC message including the registration request message, the 5G AN (or the gNB) selects an AMF to which the registration request message is transferred (S802). Note that the 5G AN (or the gNB) can select an AMF based on information included in the registration request message and/or the RRC message. The 5G AN (or the gNB) extracts the registration request message from the received RRC message and transfers the registration request message to the selected AMF (S804).

The AMF may perform a first condition fulfillment determination in a case that the AMF has received a registration request message. The first condition fulfillment determination is used by the network (or AMF) to determine whether to accept the request of the UE. In a case that the first condition fulfillment determination is true, the AMF initiates the procedure of (A) of FIG. 6, whereas in a case that the first condition fulfillment determination is false, the AMF initiates the procedure of (B) of FIG. 6.

Note that the first condition fulfillment determination may be performed based on reception of the registration request message, and/or each piece of identification information included in the registration request message, and/or subscriber information, and/or capability information of the network, and/or the operator policy, and/or a state of the network, and/or registration information of the user, and/or a context stored in the AMF, and/or the like. For example, the first condition fulfillment determination may be true in a case that the network allows the request from the UE, and the first condition fulfillment determination may be false in a case that the network does not allow the request from the UE. In addition, in a case that a network with which the UE is to be registered and/or an apparatus in the network supports the function requested by the UE, the first condition fulfillment determination may be true, whereas in a case that the network and/or the apparatus does not support the function requested by the UE, the first condition fulfillment determination may be false. Furthermore, in a case that the transmitted and/or received identification information is allowed, the first condition fulfillment determination may be true, whereas in a case that the transmitted and/or received identification information is not allowed, the first condition fulfillment determination may be false. Note that the conditions for determining whether the first condition fulfillment determination is true or false may not be limited to the conditions described above.

First, the case that the first condition fulfillment determination is true will be described. In the procedure of (A) of FIG. 6, the AMF transmits a Registration accept message to the UE via the 5G AN (or the gNB) as a response message to the registration request message (S806). Note that the registration accept message is a NAS message transmitted and/or received over the N1 interface, but is incorporated into an RRC message and transmitted and/or received between the UE and the 5G AN (the gNB).

The AMF may transmit the registration accept message including one or more pieces of identification information out of the 10th identification information to the 23rd identification information. Note that, by transmitting such identification information, the AMF may indicate that the network supports each function or may indicate that the request of the UE has been accepted. In addition, in a case that multiple pieces of identification information are transmitted and/or received, two or more pieces of identification information of these pieces of identification information may be configured as one or more pieces of identification information. Note that information indicating support of each function and information indicating a request for use of each function may be transmitted and/or received as the same piece of identification information, or may be transmitted and/or received as different pieces of identification information.

Furthermore, the AMF may transmit the registration accept message including one or more pieces of identification information out of the 10th identification information to the 23rd identification information, and thereby indicate the content indicated by these pieces of identification information to the UE. The AMF may transmit the registration accept message, and thereby indicate the content of these pieces of identification information to the UE.

Note that the AMF may select or determine whether to include, in the registration accept message, one or more pieces of identification information out of the 10th identification information to the 23rd identification information based on each piece of received identification information, subscriber information, network capability information, an operator policy, a network state, user registration information, a context held by the AMF, and/or the like.

Note that the AMF may transmit the registration accept message including identification information other than the 10th identification information to the 23rd identification information.

The AMF may indicate that the request of the UE has been accepted by transmitting a registration accept message based on each piece of received identification information, subscriber information, network capability information, an operator policy, a network state, user registration information, a context held by the AMF, and/or the like.

Furthermore, the AMF may also transmit a registration accept message including information indicating that a part of the request of the UE has been rejected or may transmit information indicating that a part of the request of the UE has been rejected to indicate a reason why a part of the request of the UE has been rejected. Furthermore, the UE may also recognize a reason why a part of the request of the UE has been rejected by receiving information indicating that a part of the request of the UE has been rejected. Note that the reason for rejection may be information indicating that content indicated by the identification information received by the AMF is not allowed.

Next, the UE receives the registration accept message from the AMF via the 5G AN (the gNB) (S806). By receiving the registration accept message, the UE can recognize that the request of the UE in the registration request message has been accepted and the content of various identification information included in the registration accept message.

Next, the UE may or may not transmit a registration complete message to the AMF via the 5G AN (the gNB) as a response message to the registration accept message (S808). Here, although the registration complete message is a NAS message transmitted and/or received over the N1 interface, the registration complete message is transmitted and/or received between the UE and the 5G AN (gNB) by being included in an RRC message.

Next, the AMF may or may not receive the registration complete message via the 5G AN (the gNB) (S808).

Each apparatus completes the procedure of (A) of FIG. 6, based on transmission and/or reception of the registration accept message and/or the registration complete message.

Next, the case that the first condition fulfillment determination is false will be described. In the procedure (B) of FIG. 6, the AMF transmits a Registration reject message to the UE via the 5G AN (the gNB) as a response message to the registration request message (S810). Here, the registration reject message is a NAS message transmitted and/or received over the N1 interface, but is incorporated into an RRC message and transmitted and/or received between the UE and the 5G AN (the gNB).

Here, the AMF may transmit the registration reject message including one or more pieces of identification information out of the 10th identification information to the 23rd identification information. Furthermore, the AMF may transmit these pieces of identification information, and may thereby indicate that the request of the UE has been rejected or indicate a reason why the request of the UE has been rejected.

Furthermore, the AMF may transmit the registration reject message including one or more pieces of identification information out of the 10th identification information to the 23rd identification information, and thereby indicate the content indicated by the identification information included in the registration reject message to the UE. The AMF may transmit the registration reject message, and thereby indicate the content of these pieces of identification information to the UE.

Note that the AMF may select or determine whether to include, in the registration reject message, one or more pieces of identification information out of the 10th identification information to the 23rd identification information based on each piece of received identification information, subscriber information, network capability information, an operator policy, a network state, user registration information, a context held by the AMF, and/or the like.

Furthermore, the AMF may also transmit a registration reject message to indicate that the request of the UE in the registration request message has been rejected. Furthermore, the AMF may also transmit a registration reject message including information indicating a reason for rejection or may transmit a reason for rejection to indicate the reason for rejection. Furthermore, the UE may also recognize a reason why the request of the UE has been rejected by receiving information indicating the reason why the request of the UE has been rejected. Note that the reason for rejection may be information indicating that content indicated by the identification information received by the AMF is not allowed.

Next, the UE receives the registration reject message from the AMF via the 5G AN (the gNB) (S810). By receiving the registration reject message, the UE can recognize that the request of the UE in the registration request message has been rejected and the content of various identification information included in the registration reject message.

The UE may also recognize that the request of the UE has been rejected in a case that the UE does not receive a registration reject message even in a case that a prescribed period of time has elapsed after transmitting a registration request message.

Each apparatus completes the procedure (B) in the present procedure based on transmission and/or reception of the registration reject message.

Note that the procedure of (B) of FIG. 6 may be initiated in a case that the procedure of (A) of FIG. 6 is cancelled.

Each apparatus completes the registration procedure, based on completion of the procedure of (A) or (B) of FIG. 6. Note that, based on completion of the procedure of (A) of FIG. 6, each apparatus may transition to a state (RM_REGISTERED state) in which the UE is registered with the network. Based on completion of the procedure of (B) of FIG. 6, each apparatus may maintain a state (RM_DEREGISTERED state) in which the UE is not registered with the network, or may transition to a state in which the UE is not registered with the network.

Furthermore, each apparatus may perform processing based on information transmitted and/or received in the registration procedure, based on completion of the registration procedure. For example, in a case that information indicating that a part of the request from the UE has been rejected is transmitted and/or received, the reason for rejection of the request from the UE may be recognized. Furthermore, each apparatus may also perform the present procedure again or may perform a registration procedure with the core network_B or another cell based on the reason why the request of the UE has been rejected.

Moreover, the UE may store the identification information received along with the registration accept message or the registration reject message or may recognize determination of the network based on the completion of the registration procedure.

### 3.2. De-Registration Procedure

Next, the De-registration procedure will be described. In the present section, the present procedure refers to the de-registration procedure. The de-registration procedure is a procedure for deregistering the UE, which is a procedure initiated by the UE or the network. A de-registration procedure may also be a procedure for changing the state of the UE to a deregistered state.

The UE and the network can perform the present procedure at any time as long as the UE is in a state of being registered with the network. In other words, the UE and the network can initiate the present procedure at any time as long as the UE is in a registered state. Each of the apparatuses (especially, the UE and the AMF) can transition to a deregistered state based on completion of a de-registration procedure.

Furthermore, apparatuses in the core network, such as the AMF, may initiate the present procedure based on update of a configuration of the network and/or update of the operator policy. Note that the present procedure may be triggered by detection of mobility of the UE, detection of a state change in the UE, and/or the access network, and/or the core network, or a state change in the network slice. Furthermore, the present procedure may be triggered by reception of a request from the DN and/or an application server of the DN, a change in a configuration of the network, or a change in the operator policy. Note that a trigger for the apparatus in the core network to initiate the present procedure is not limited to these.

Furthermore, the present procedure may be performed at any timing in a state in which each apparatus has established a 5GMM context and/or in a state in which each apparatus is in a 5GMM connected mode.

During the present procedure, each apparatus may transmit and/or receive a message including identification information indicating a reason for de-registration of the UE and/or identification information indicating that network reselection is necessary. Furthermore, each apparatus may delete the context of the UE or initiate a behavior indicated by the network based on completion of the present procedure.

The UE may recognize a reason for de-registration of the UE based on control information transmitted and/or received through the present procedure. Furthermore, the UE may delete the context of the UE or initiate network reselection along with recognition of a reason for de-registration of the UE. In other words, an apparatus in the core network may allow the UE to recognize a reason for de-registration of the UE by initiating the present procedure and further transmitting a control message and control information of the present procedure to the UE. Furthermore, an apparatus in the core network may also allow the UE to delete the context of the UE or to initiate network reselection by allowing the UE to recognize a reason for de-registration of the UE.

Note that the de-registration procedure includes the UE-initiated de-registration procedure and the network-initiated de-registration procedure. The UE-initiated de-registration procedure and the network-initiated de-registration procedure will be described below.

### 3.2.1. UE-Initiated De-Registration Procedure

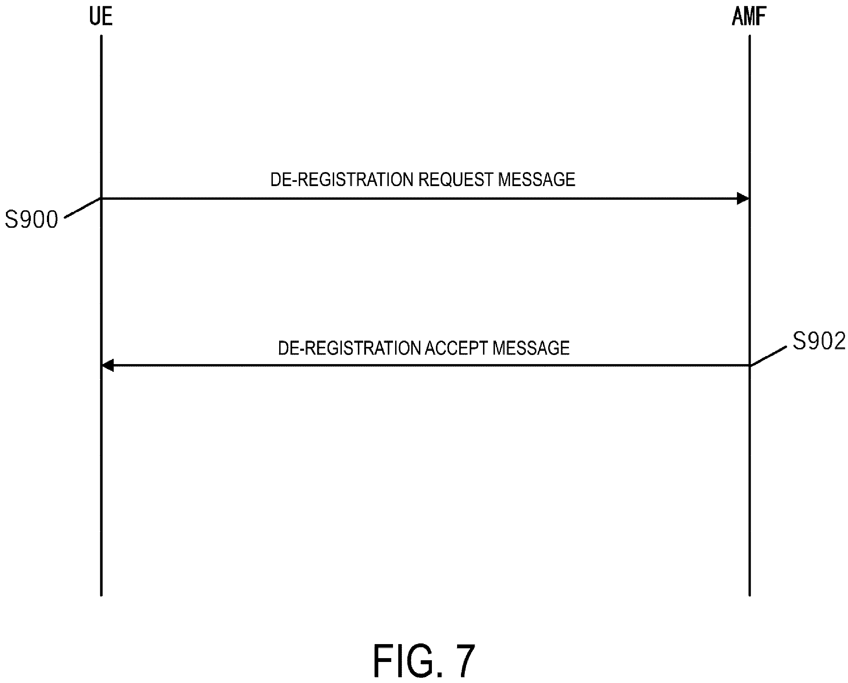

First, the UE-initiated de-registration procedure will be described with reference to FIG. 7. In the present section, the present procedure refers to the UE-initiated de-registration procedure. The UE-initiated de-registration procedure is a procedure initiated by the UE in the de-registration procedure. Each step of the present procedure will be described below.

First, the UE transmits a Deregistration request message to the AMF via the 5G AN (or the gNB) (S900) to initiate the de-registration procedure.

Here, the UE may transmit the de-registration request message including one or more pieces of identification information out of the 1st identification information to the 3rd identification information. Note that the UE may also transmit such identification information to indicate a reason for de-registration of the UE or to indicate that network reselection is necessary. Furthermore, two or more of such pieces of identification information may be configured as one or more pieces of identification information. Note that information indicating support of each function and information indicating a request for use of each function may be transmitted and/or received as the same piece of identification information, or may be transmitted and/or received as different pieces of identification information.

Furthermore, the UE may transmit the de-registration request message including one or more pieces of identification information out of the 1st identification information to the 3rd identification information, and thereby indicate the content indicated by the identification information included in the de-registration request message to the AMF.

Note that the UE may select or determine whether to include one or more pieces of identification information out of the 1st identification information to the 3rd identification information in the de-registration request message, based on each piece of received identification information, subscriber information, network capability information, an operator policy, a network state, user registration information, a context held by the UE, and/or the like.

The UE may request to delete the context of the UE by transmitting the de-registration request message based on each piece of received identification information, subscriber information, UE capability information, a UE state, user registration information, a context held by the UE, and/or the like.

Next, the AMF receives the de-registration request message via the 5G AN (the gNB) (S900). The AMF may recognize a reason for de-registration of the UE based on the de-registration request message and/or identification information included in the de-registration request message.

Furthermore, based on the identification information included in the de-registration request message, the AMF may transmit a Deregistration accept message to the UE via the 5G AN (the gNB) as a response message to the de-registration request message (S902).

Next, the UE may receive the de-registration accept message via the 5G AN (the gNB) (S902).

Each apparatus completes the present procedure based on transmission and/or reception of the de-registration request message and/or the de-registration accept message.

Furthermore, each apparatus may perform processing based on the information transmitted and/or received in the present procedure, based on completion of the present procedure. For example, each apparatus may delete the context of the UE in a case that update information for configuration information has been transmitted and/or received.

Furthermore, the UE may initiate network reselection and/or a registration procedure based on completion of the present procedure in a case that information indicating that it is necessary to perform network reselection and/or a registration procedure has been transmitted and/or received.

### 3.2.2. Network-Initiated De-Registration Procedure

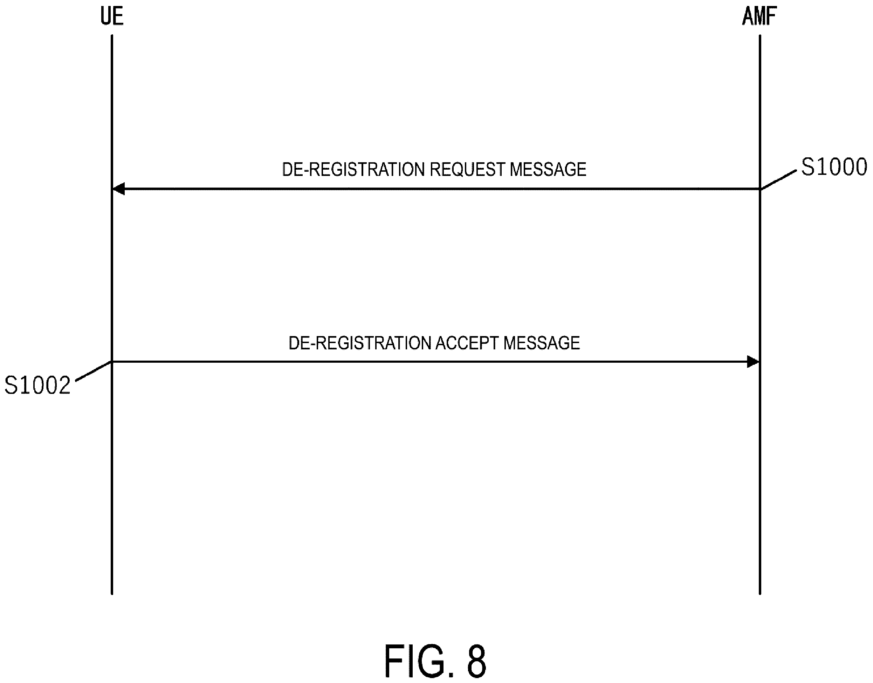

Next, the Network-initiated de-registration procedure will be described with reference to FIG. 8. In the present section, the present procedure refers to the network-initiated de-registration procedure. The network-initiated de-registration procedure is a procedure initiated by the network in the de-registration procedure. Each step of the present procedure will be described below.

First, the AMF transmits a Deregistration request message to the UE via the 5G AN (or the gNB) (S1000) to initiate the de-registration procedure.

Here, the AMF may transmit the de-registration request message including one or more pieces of identification information out of the 10th identification information to the 23rd identification information. Note that the AMF may also transmit such identification information to indicate a reason for de-registration of the UE or to indicate that network reselection is necessary. Furthermore, two or more of such pieces of identification information may be configured as one or more pieces of identification information. Note that information indicating support for each function and information indicating a request to use each function may be transmitted and/or received with the same piece of identification information or may be transmitted and/or received as different pieces of identification information.

Furthermore, the AMF may transmit the de-registration request message including one or more pieces of identification information out of the 10th identification information to the 23rd identification information, and thereby indicate the content indicated by the identification information included in the de-registration request message to the UE.

Note that the AMF may select or determine whether to include, in the de-registration request message, one or more pieces of identification information out of the 10th identification information to the 23rd identification information based on each piece of received identification information, subscriber information, network capability information, an operator policy, a network state, user registration information, a context held by the AMF, and/or the like.

The AMF may request to delete the context of the UE by transmitting the de-registration request message based on each piece of received identification information, subscriber information, network capability information, an operator policy, a network state, user registration information, a context held by the AMF, and/or the like.

Next, the UE receives the de-registration request message via the 5G AN (the gNB) (S1000). The UE may recognize a reason for de-registration of the UE or may perform network reselection based on the de-registration request message and/or identification information included in the de-registration request message.

Furthermore, based on the identification information included in the de-registration request message, the UE may transmit a Deregistration accept message to the AMF via the 5G AN (the gNB) as a response message to the de-registration request message (S1002).

Next, the AMF may receive the de-registration accept message via the 5G AN (the gNB) (S1002). Each apparatus completes the present procedure based on transmission and/or reception of the de-registration request message and/or the de-registration accept message.

Furthermore, each apparatus may perform processing based on the information transmitted and/or received in the present procedure, based on completion of the present procedure. For example, each apparatus may delete the context of the UE in a case that update information for configuration information has been transmitted and/or received.

Furthermore, the UE may initiate network reselection and/or a registration procedure based on completion of the present procedure in a case that information indicating that it is necessary to perform network reselection and/or a registration procedure has been transmitted and/or received.

In the above procedure, an apparatus in the core network can indicate to the UE to delete configuration information that the UE has already applied or indicate to the UE to stop or change a function that the UE is performing by transmitting and/or receiving a de-registration request message.

### 3.3. NAS Transport Procedure

Next, the NAS transport procedure will be described. In the present section, the present procedure refers to the NAS transport procedure. The NAS transport procedure is a procedure for providing payload forwarding between the UE and the AMF, which is a procedure initiated by the UE or the network.

The present procedure may be performed at any timing in a state in which each apparatus has established a 5GMM context and/or in a state in which each apparatus is in a 5GMM connected mode.

Furthermore, apparatuses in the core network, such as the AMF, may initiate the present procedure based on update of a configuration of the network and/or update of the operator policy. Note that the present procedure may be triggered by detection of mobility of the UE, detection of a state change in the UE, and/or the access network, and/or the core network, or a state change in the network slice. Furthermore, the present procedure may be triggered by reception of a request from the DN and/or an application server of the DN, a change in a configuration of the network, or a change in the operator policy. Note that a trigger for the apparatus in the core network to initiate the present procedure is not limited to these.

Each apparatus may initiate the behavior indicated by the network, based on completion of the present procedure.

Note that the NAS transport procedure includes the UE-initiated NAS transport procedure and the network-initiated NAS transport procedure. The UE-initiated NAS transport procedure and the network-initiated NAS transport procedure will be described below.

### 3.3.1. UE-Initiated NAS Transport Procedure

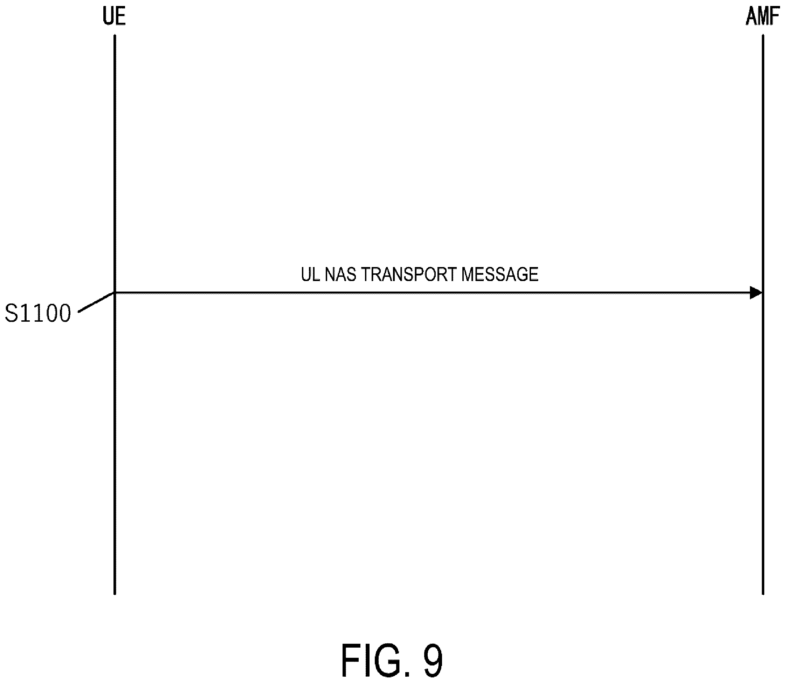

First, the UE-initiated NAS transport procedure will be described with reference to FIG. 9. In the present section, the present procedure refers to the UE-initiated NAS transport procedure. The UE-initiated NAS transport procedure is a procedure initiated by the UE in the NAS transport procedure. Each step of the present procedure will be described below.

First, the UE transmits a UL NAS TRANSPORT message to the AMF (S1100), and initiates the NAS transport procedure. The UL NAS transport message may be referred to as an Uplink Non-Access-Stratum transport message.

Here, the UE may transmit the UL NAS transport message including one or more pieces of identification information out of the 1st identification information to the 3rd identification information. Note that two or more pieces of identification information of these pieces of identification information may be configured as one or more pieces of identification information. Note that information indicating support of each function and information indicating a request for use of each function may be transmitted and/or received as the same piece of identification information, or may be transmitted and/or received as different pieces of identification information.

Furthermore, the UE may transmit the UL NAS transport message including one or more pieces of identification information out of the 1st identification information to the 3rd identification information, and thereby indicate the content indicated by the identification information included in the UL NAS transport message to the AMF.

Note that the UE may select or determine whether to include one or more pieces of identification information out of the 1st identification information to the 3rd identification information in the UL NAS transport message, based on each piece of received identification information, subscriber information, network capability information, an operator policy, a network state, user registration information, a context held by the UE, and/or the like.

Next, the AMF receives the UL NAS transport message (S1100).

Each apparatus completes the present procedure, based on transmission and/or reception of the UL NAS transport message.

Furthermore, each apparatus may perform processing based on the information transmitted and/or received in the present procedure, based on completion of the present procedure.

### 3.3.2. Network-Initiated NAS Transport Procedure

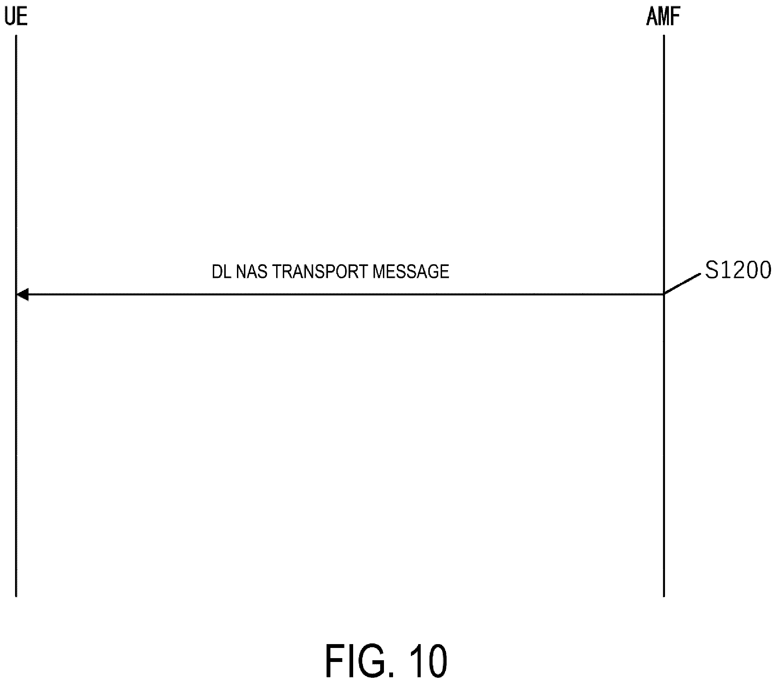

Next, the Network-initiated NAS transport procedure will be described with reference to FIG. 10. In the present section, the present procedure refers to the network-initiated NAS transport procedure. The network-initiated NAS transport procedure is a procedure initiated by the network in the NAS transport procedure. Each step of the present procedure will be described below.

First, the AMF transmits a DL NAS TRANSPORT message to the UE (S1200), and initiates the NAS transport procedure. The DL NAS transport message may be referred to as a Downlink Non-Access-Stratum transport message.

Here, the AMF may transmit the DL NAS transport message including one or more pieces of identification information out of the 10th identification information to the 23rd identification information. Note that two or more pieces of identification information of these pieces of identification information may be configured as one or more pieces of identification information. Note that information indicating support of each function and information indicating a request for use of each function may be transmitted and/or received as the same piece of identification information, or may be transmitted and/or received as different pieces of identification information.

Furthermore, the AMF may transmit the DL NAS transport message including one or more pieces of identification information out of the 10th identification information to the 23rd identification information, and thereby indicate the content indicated by the identification information included in the DL NAS transport message to the UE.

Note that the AMF may select or determine whether to include one or more pieces of identification information out of the 10th identification information to the 23rd identification information in the DL NAS transport message, based on each piece of received identification information, subscriber information, network capability information, an operator policy, a network state, user registration information, a context held by the AMF, and/or the like.

Next, the UE receives the DL NAS transport message (S1200).

Each apparatus completes the present procedure, based on transmission and/or reception of the DL NAS transport message.

Furthermore, each apparatus may perform processing based on the information transmitted and/or received in the present procedure, based on completion of the present procedure.

### 4. Embodiments

Next, each embodiment will be described.

### 4.1. First Embodiment

First, a first embodiment will be described. In the present section, the first embodiment may be referred to as the present embodiment.

In the present embodiment, the network may be the hosting network. Here, the hosting network may be the SNPN, or may be the PNI-NPN.

In the present embodiment, the registration procedure, and/or the UE-initiated NAS transport procedure, and/or the network-initiated NAS transport procedure may be performed.

In the present embodiment, the first control message may be the registration accept message or the DL NAS transport message.

Each step of the present procedure will be described below.

First, the network transmits the first control message to the UE. Here, the network may transmit the first control message including one or more pieces of identification information out of the 10th identification information to the 13th identification information.

Here, the network may transmit the first control message including one or more pieces of identification information out of the 10th identification information to the 13th identification information, and thereby indicate the content indicated by the identification information included in the first control message to the UE.

Specifically, the network may transmit the 10th identification information, and thereby indicate the SOR-CMCI to the UE. The network may transmit the 10th identification information including one or more pieces of identification information out of the 11th identification information to the 13th identification information, and thereby indicate the content of each piece of identification information to the UE. Specifically, the network may transmit the 10th identification information including one or more pieces of identification information out of the 11th identification information to the 13th identification information, and thereby indicate the SOR-CMCI, and/or the SOR-CMCI rule, and/or the criterion, and/or the first timer value to the UE.

The network may transmit the 11th identification information, and thereby indicate the SOR-CMCI rule to the UE. Here, the network may transmit the 10th identification information including the 11th identification information to the UE. The network may transmit the 11th identification information including one or more pieces of identification information out of the 12th identification information to the 13th identification information, and thereby indicate the content of each piece of identification information to the UE. Specifically, the network may transmit the 11th identification information including one or more pieces of identification information out of the 12th identification information to the 13th identification information, and thereby indicate the SOR-CMCI rule, and/or the criterion, and/or the first timer value to the UE.

The network may transmit the 12th identification information, and thereby indicate the criterion to the UE. Here, the network may transmit the 10th identification information and/or the 11th identification information including 12th identification information to the UE.

Here, the network may configure the DNN of the PDU session or the criterion related to the localized services for the 12th identification information.

The network may transmit the 13th identification information, and thereby indicate the first timer value to the UE. Here, the network may transmit the 10th identification information and/or the 11th identification information including the 13th identification information to the UE.

The network may transmit the first control message, and thereby indicate the content of each piece of identification information included in the first control message to the UE. The network may transmit each piece of identification information, and thereby indicate the content of each piece of identification information to the UE.

Note that the network may select or determine whether to include one or more pieces of identification information out of the 10th identification information to the 13th identification information in the first control message, based on a UE state, and/or information received from the localized service provider, and/or information received from the UDM, and/or information received from the AUSF, and/or the like.

The network may determine whether to transmit the first control message and/or each piece of identification information, based on a UE state, and/or information received from the localized service provider, and/or information received from the UDM, and/or information received from the AUSF, and/or the like. The network may transmit the first control message and/or each piece of identification information, based on information received from the localized service provider and/or the UDM. The network may transmit the first control message and/or each piece of identification information, based on information indicating end of the localized services, which is received from the AUSF.

Next, the UE receives the first control message. The UE may receive the first control message including one or more pieces of identification information out of the 10th identification information to the 13th identification information from the network.

Furthermore, the UE may store the identification information received together with the first control message, or may recognize determination of the network, based on reception of the first control message. The UE may recognize the content of the identification information received together with the first control message, based on reception of the first control message.

Specifically, in a case of receiving the 10th identification information, the UE may recognize the SOR-CMCI. In a case of receiving the 10th identification information, the UE may apply the SOR-CMCI. Specifically, in a case of receiving the 10th identification information, the UE may perform processing in a case of applying the SOR-CMCI.

In a case of receiving the 10th identification information including one or more pieces of identification information out of the 11th identification information to the 13th identification information, the UE may recognize each piece of identification information. Specifically, in a case of receiving the 10th identification information including one or more pieces of identification information out of the 11th identification information to the 13th identification information, the UE may recognize the SOR-CMCI, and/or the SOR-CMCI rule, and/or the criterion, and/or the first timer value.

In a case of receiving the 10th identification information including one or more pieces of identification information out of the 11th identification information to the 13th identification information, the UE may perform processing for each piece of identification information. Specifically, in a case of receiving the 10th identification information including one or more pieces of identification information out of the 11th identification information to the 13th identification information, the UE may perform processing for the SOR-CMCI, and/or the SOR-CMCI rule, and/or the criterion, and/or the first timer value.

In a case of receiving the 11th identification information, the UE may recognize the SOR-CMCI rule. In a case of receiving the 11th identification information, the UE may perform processing for the SOR-CMCI rule.

In a case of receiving the 11th identification information including one or more pieces of identification information out of the 12th identification information to the 13th identification information, the UE may recognize each piece of identification information. Specifically, in a case of receiving the 11th identification information including one or more pieces of identification information out of the 12th identification information to the 13th identification information, the UE may recognize the SOR-CMCI rule, and/or the criterion, and/or the first timer value.

In a case of receiving the 11th identification information including one or more pieces of identification information out of the 12th identification information to the 13th identification information, the UE may perform processing for each piece of identification information. Specifically, in a case of receiving the 11th identification information including one or more pieces of identification information out of the 12th identification information to the 13th identification information, the UE may perform processing for the SOR-CMCI rule, and/or the criterion, and/or the first timer value.

In a case of receiving the 12th identification information, the UE may recognize the criterion. In a case of receiving the 12th identification information, the UE may perform processing for the criterion.

In a case of receiving the 13th identification information, the UE may recognize the first timer value. In a case of receiving the 13th identification information, the UE may perform processing for the first timer value.

Here, in a case that the 12th identification information is the criterion indicating the localized services, the UE may check whether the localized services are ongoing, and start an associated first timer, using the 13th identification information. In a case that the 12th identification information is the criterion indicating the localized services, the UE may check whether the localized services are ongoing, and start the first timer associated with the 12th identification information, using the 13th identification information.

The UE may start the associated first timer, using the 13th identification information, based on the 12th identification information.

In a case that the 13th identification information is associated with the 12th identification information indicating the criterion related to the localized services, the 13th identification information may be a value different for each UE. In a case that the 13th identification information is associated with the 12th identification information indicating the DNN of the PDU session, the 13th identification information may be a value different for each UE.

In a case that the 13th identification information is associated with the 12th identification information indicating the criterion related to the localized services, the 13th identification information may be a value different for each group of UEs including one or more UEs. For example, in a case that UE 1, UE 2, UE 3, and UE 4 are present, UE group 1 includes UE 1 and UE 2, and UE group 2 includes UE 3 and UE 4, the 13th identification information for UE 1 and UE 2 (or UE group 1) may be timer value 1, and the 13th identification information for UE 3 and UE 4 (or UE group 2) may be timer value 2.

Note that the behavior of the UE may be performed after receiving the first control message. The behavior of the UE may be performed after receiving one or more pieces of identification information out of the 10th identification information to the 13th identification information.

In a case of receiving the first control message, the UE may perform the behavior in a case of receiving each piece of identification information included in the first control message.

### 4.2. Second Embodiment

Next, a second embodiment will be described. In the present section, the second embodiment may be referred to as the present embodiment.

In the present embodiment, the network may be the hosting network. Here, the hosting network may be the SNPN, or may be the PNI-NPN.

In the present embodiment, the network-initiated de-registration procedure may be performed.

Each step of the present procedure will be described below.

First, the network transmits the de-registration request message to the UE. Here, the network may transmit the de-registration request message including one or more pieces of identification information out of the 14th identification information to the 16th identification information.

Here, the network may transmit de-registration request message including one or more pieces of identification information out of the 14th identification information to the 16th identification information, and thereby indicate the content indicated by the identification information included in the de-registration request message to the UE.

Specifically, the network may transmit the 14th identification information, and thereby indicate a cause value indicating that the localized services have ended to the UE. The network may transmit the 14th identification information, and thereby indicate that the localized services have ended to the UE.

The network may transmit the 15th identification information, and thereby indicate the range of the registration wait time to the UE. The network may transmit the 15th identification information, and thereby indicate the minimum registration wait time and the maximum registration wait time to the UE.

The network may transmit the 16th identification information, and thereby indicate the timer value to the UE.

The network may transmit the de-registration request message, and thereby indicate the content of each piece of identification information included in the de-registration request message to the UE. The network may transmit each piece of identification information, and thereby indicate the content of each piece of identification information to the UE.

Note that the network may select or determine whether to include one or more pieces of identification information out of the 14th identification information to the 16th identification information in the de-registration request message, based on a UE state, and/or information received from the localized service provider, and/or information received from the UDM, and/or information received from the AUSF, and/or the like.

The network may determine whether to transmit the de-registration request message and/or each piece of identification information, based on a UE state, and/or information received from the localized service provider, and/or information received from the UDM, and/or information received from the AUSF, and/or the like. The network may transmit the de-registration request message and/or each piece of identification information, based on information received from the localized service provider and/or the UDM. The network may transmit the de-registration request message and/or each piece of identification information, based on information indicating end of the localized services, which is received from the AUSF.

Next, the UE receives the de-registration request message. The UE may receive the de-registration request message including one or more pieces of identification information out of the 14th identification information to the 16th identification information from the network.

Furthermore, the UE may store the identification information received together with the de-registration request message, or may recognize determination of the network, based on reception of the de-registration request message. The UE may recognize the content of the identification information received together with the de-registration request message, based on reception of the de-registration request message.

Specifically, in a case of receiving the 14th identification information, the UE may recognize that the localized services have ended. In a case of receiving the 14th identification information, the UE may delete the 15th identification information or the 16th identification information stored in the UE.

In a case of receiving the 15th identification information, the UE may recognize the range of the registration wait time. In a case of receiving the 15th identification information, the UE may delete the 15th identification information stored in the UE, and store the received 15th identification information.

In a case of receiving the 16th identification information, the UE may recognize the registration wait time. In a case of receiving the 16th identification information, the UE may delete the 16th identification information stored in the UE, and store the received 16th identification information.

In a case of receiving the 14th identification information and receiving the 15th identification information or the 16th identification information, the UE may delete the 15th identification information or the 16th identification information stored in the UE, and store the received 15th identification information or 16th identification information.

In a case of determining to perform PLMN selection or SNPN selection and holding the stored 15th identification information, the UE may generate a random numerical value within a range of the 15th identification information, and start a second timer, using the generated numerical value.

In a case of determining to perform PLMN selection or SNPN selection and holding the stored 16th identification information, the UE may start the second timer, using the 16th identification information.

Here, while the second timer is running, the UE need not initiate the registration procedure. In a case that the second timer expires, the UE may perform the registration procedure.

Note that the behavior of the UE may be performed after receiving the de-registration request message. The behavior of the UE may be performed after receiving one or more pieces of identification information out of the 14th identification information to the 16th identification information.

In a case of receiving the de-registration request message, the UE may perform the behavior in a case of receiving each piece of identification information included in the de-registration request message.

### 4.3. Third Embodiment

Next, a third embodiment will be described. In the present section, the third embodiment may be referred to as the present embodiment.

In the present embodiment, the network may be the hosting network. Here, the hosting network may be the SNPN, or may be the PNI-NPN.

In the present embodiment, the registration procedure may be performed.

Each step of the present procedure will be described below.

First, the UE transmits the registration request message to the network. Here, the UE may transmit the registration request message including one or more pieces of identification information out of the 1st identification information to the 3rd identification information.

Here, the UE may transmit the registration request message including one or more pieces of identification information out of the 1st identification information to the 3rd identification information, and thereby indicate the content indicated by the identification information included in the registration request message to the network.

Specifically, the UE may transmit the 1st identification information, and thereby indicate the SNPN ID to the network.

The UE may transmit, to the network, the 2nd identification information, and thereby indicate whether to support the CAG. The UE may transmit the 2nd identification information, and thereby indicate support of the CAG to the network. The UE may transmit the 2nd identification information, and thereby indicate non-support of the CAG to the network.

The UE may transmit the 3rd identification information, and thereby indicate support of the hosting network to the network.

Next, the network transmits the registration reject message to the UE. Here, the network may transmit the registration reject message including one or more pieces of identification information out of the 17th identification information to the 23rd identification information.

Here, the network may transmit the registration reject message including one or more pieces of identification information out of the 17th identification information to the 23rd identification information, and thereby indicate the content indicated by the identification information included in the registration reject message to the UE.

Specifically, the network may transmit the 17th identification information, and thereby indicate not authorized for the hosting network, to the UE. The network may transmit the 17th identification information, and thereby indicate not authorized for the hosting network, to the UE.

The network may transmit the 18th identification information, and thereby indicate temporarily not authorized for the SNPN, to the UE. The network may transmit the 18th identification information, and thereby indicate temporarily not authorized for the SNPN indicated by the 1st identification information, to the UE. The network may transmit the 18th identification information, and thereby indicate temporarily not authorized for the SNPN, to the UE.

The network may transmit the 19th identification information, and thereby indicate permanently not authorized for the SNPN, to the UE. The network may transmit the 19th identification information, and thereby indicate permanently not authorized for the SNPN indicated by the 1st identification information, to the UE. The network may transmit the 19th identification information, and thereby indicate permanently not authorized for the SNPN, to the UE.

The network may transmit the 20th identification information, and thereby indicate a list including the CAG IDs to the UE.

The network may transmit the registration reject message, and thereby indicate the content of each piece of identification information included in the registration reject message to the UE. The network may transmit each piece of identification information, and thereby indicate the content of each piece of identification information to the UE.

Note that the network may select or determine whether to include one or more pieces of identification information out of the 17th identification information to the 23rd identification information in the registration reject message, based on a UE state, and/or information received from the localized service provider, and/or information received from the UDM, and/or information received from the AUSF, and/or the like.

The network may determine whether to transmit the registration reject message and/or each piece of identification information, based on a UE state, and/or information received from the localized service provider, and/or information received from the UDM, and/or information received from the AUSF, and/or the like. The network may transmit the registration reject message and/or each piece of identification information, based on information received from the localized service provider and/or the UDM. The network may transmit the registration reject message and/or each piece of identification information, based on information indicating end of the localized services, which is received from the AUSF.

Next, the UE receives the registration reject message. The UE may receive the registration reject message including one or more pieces of identification information out of the 17th identification information to the 23rd identification information from the network.

Furthermore, the UE may store the identification information received together with the registration reject message, or may recognize determination of the network, based on reception of the registration reject message. The UE may recognize the content of the identification information received together with the registration reject message, based on reception of the registration reject message.

Specifically, in a case of receiving the 17th identification information, the UE may recognize not authorized for the hosting network.

The UE may store the 1st identification information in the list of forbidden hosting networks, based on the 17th identification information. In a case that the registration request message is for the localized services, the UE may store the 1st identification information in the list of forbidden hosting networks, based on the 17th identification information. Here, the list of forbidden hosting networks may be similar to the 23rd identification information.

The UE need not store the 1st identification information in the "temporarily forbidden SNPNs" list and/or the "permanently forbidden SNPNs" list, based on the 17th identification information. In a case that the registration request message is for the localized services, the UE need not store the 1st identification information in the "temporarily forbidden SNPNs" list and/or the "permanently forbidden SNPNs" list, based on the 17th identification information.

The UE may replace the 20th identification information, and/or the 22nd identification information, and/or the 23rd identification information stored in the UE with the received 20th identification information, and/or 22nd identification information, and/or 23rd identification information, based on the 17th identification information or the 21st identification information. In a case that the registration request message is for the localized services in the PNI-NPN, the UE may replace the 20th identification information, and/or the 22nd identification information, and/or the 23rd identification information stored in the UE with the received 20th identification information, and/or 22nd identification information, and/or 23rd identification information, based on the 17th identification information or the 21st identification information. In other words, in a case that the registration request message is for the hosting network as the PNI-NPN, the UE may replace the 20th identification information, and/or the 22nd identification information, and/or the 23rd identification information stored in the UE with the received 20th identification information, and/or 22nd identification information, and/or 23rd identification information, based on the 17th identification information or the 21st identification information.

In a case that the UE supports the hosting network, the UE may replace the 20th identification information, and/or the 22nd identification information, and/or the 23rd identification information stored in the UE with the received 20th identification information, and/or 22nd identification information, and/or 23rd identification information, based on the 17th identification information or the 21st identification information. In other words, in a case that the UE supports the localized services, the UE may replace the 20th identification information, and/or the 22nd identification information, and/or the 23rd identification information stored in the UE with the received 20th identification information, and/or 22nd identification information, and/or 23rd identification information, based on the 17th identification information or the 21st identification information.

The UE may replace an entry of a serving VPLMN of the 20th identification information, and/or the 22nd identification information, and/or the 23rd identification information stored in the UE with an entry of the serving VPLMN of the received 20th identification information, and/or 22nd identification information, and/or 23rd identification information, based on the 17th identification information or the 21st identification information. In a case that the registration request message is for the localized services in the PNI-NPN, the UE may replace an entry of a serving VPLMN of the 20th identification information, and/or the 22nd identification information, and/or the 23rd identification information stored in the UE with an entry of the serving VPLMN of the received 20th identification information, and/or 22nd identification information, and/or 23rd identification information, based on the 17th identification information or the 21st identification information. In other words, in a case that the registration request message is for the hosting network as the PNI-NPN, the UE may replace an entry of a serving VPLMN of the 20th identification information, and/or the 22nd identification information, and/or the 23rd identification information stored in the UE with an entry of the serving VPLMN of the received 20th identification information, and/or 22nd identification information, and/or 23rd identification information, based on the 17th identification information or the 21st identification information.

In a case that the UE supports the hosting network, the UE may replace an entry of a serving VPLMN of the 20th identification information, and/or the 22nd identification information, and/or the 23rd identification information stored in the UE with an entry of the serving VPLMN of the received 20th identification information, and/or 22nd identification information, and/or 23rd identification information, based on the 17th identification information or the 21st identification information. In other words, in a case that the UE supports the localized services, the UE may replace an entry of a serving VPLMN of the 20th identification information, and/or the 22nd identification information, and/or the 23rd identification information stored in the UE with an entry of the serving VPLMN of the received 20th identification information, and/or 22nd identification information, and/or 23rd identification information, based on the 17th identification information or the 21st identification information.

The UE may delete the 20th identification information, and/or the 22nd identification information, and/or the 23rd identification information stored in the UE, based on the 17th identification information or the 21st identification information. In a case that the registration request message is for the localized services in the PNI-NPN, the UE may delete the 20th identification information, and/or the 22nd identification information, and/or the 23rd identification information stored in the UE, based on the 17th identification information or the 21st identification information. In other words, in a case that the registration request message is for the hosting network as the PNI-NPN, the UE may delete the 20th identification information, and/or the 22nd identification information, and/or the 23rd identification information stored in the UE, based on the 17th identification information or the 21st identification information.

In a case that the UE supports the hosting network, the UE may delete the 20th identification information, and/or the 22nd identification information, and/or the 23rd identification information stored in the UE, based on the 17th identification information or the 21st identification information. In other words, in a case that the UE supports the localized services, the UE may delete the 20th identification information, and/or the 22nd identification information, and/or the 23rd identification information stored in the UE, based on the 17th identification information or the 21st identification information.

In a case of receiving the 18th identification information, the UE may recognize temporarily not authorized for the SNPN. In a case of receiving the 18th identification information, the UE may recognize temporarily not authorized for the SNPN indicated by the 1st identification information. In a case of receiving the 18th identification information, the UE may recognize temporarily not authorized for the SNPN.

The UE may store the 1st identification information in the list of SNPNs temporarily forbidden for the localized services, based on the 18th identification information. In a case that the registration request message is for the localized services in the SNPN, the UE may store the 1st identification information in the list of SNPNs temporarily forbidden for the localized services, based on the 18th identification information. In other words, in a case that the registration request message is for the hosting network as the SNPN, the UE may store the 1st identification information in the list of SNPNs temporarily forbidden for the localized services, based on the 18th identification information.

In a case that the UE supports the hosting network, the UE may store the 1st identification information in the list of SNPNs temporarily forbidden for the localized services, based on the 18th identification information. In other words, in a case that the UE supports the localized services, the UE may store the 1st identification information in the list of SNPNs temporarily forbidden for the localized services, based on the 18th identification information.

In a case of receiving the 19th identification information, the UE may recognize permanently not authorized for the SNPN. In a case of receiving the 19th identification information, the UE may recognize permanently not authorized for the SNPN indicated by the 1st identification information. In a case of receiving the 19th identification information, the UE may recognize permanently not authorized for the SNPN.

The UE may store the 1st identification information in the list of permanently forbidden SNPNs for the localized services, based on the 19th identification information. In a case that the registration request message is for the localized services in the SNPN, the UE may store the 1st identification information in the list of permanently forbidden SNPNs for the localized services, based on the 19th identification information. In other words, in a case that the registration request message is for the hosting network as the SNPN, the UE may store the 1st identification information in the list of permanently forbidden SNPNs for the localized services, based on the 19th identification information.

In a case that the UE supports the hosting network, the UE may store the 1st identification information in the list of permanently forbidden SNPNs for the localized services, based on the 19th identification information. In other words, in a case that the UE supports the localized services, the UE may store the 1st identification information in the list of permanently forbidden SNPNs for the localized services, based on the 19th identification information.

In a case of receiving the 20th identification information, the UE may replace the 20th identification information stored in the UE with the received 20th identification information. In a case of receiving the 20th identification information, the UE may replace the 20th identification information stored in the UE with the received 20th identification information, based on the 17th identification information or the 21st identification information.

In a case of receiving the 21st identification information, the UE may recognize not authorized for the CAG. In a case of receiving the 21st identification information, the UE may recognize that authorization is admitted only for CAG cells.

In a case of receiving the 22nd identification information, the UE may replace the 22nd identification information stored in the UE with the received 22nd identification information. In a case of receiving the 22nd identification information, the UE may replace the 22nd identification information stored in the UE with the received 22nd identification information, based on the 17th identification information or the 21st identification information.

In a case of receiving the 23rd identification information, the UE may replace the 23rd identification information stored in the UE with the received 23rd identification information. In a case of receiving the 23rd identification information, the UE may replace the 23rd identification information stored in the UE with the received 23rd identification information, based on the 17th identification information or the 21st identification information.

In a case of receiving the registration reject message, the UE may recognize the content of each piece of identification information included in the registration reject message. In a case of receiving each piece of identification information, the UE may recognize the content of each piece of identification information.

Note that the behavior of the UE may be performed after receiving the registration reject message. The behavior of the UE may be performed after receiving one or more pieces of identification information out of the 17th identification information to the 23rd identification information.

In a case of receiving the registration reject message, the UE may perform the behavior in a case of receiving each piece of identification information included in the registration reject message.

### 5. Modifications

A program running on an apparatus according to an aspect of the present invention may serve as a program that controls a Central Processing Unit (CPU) and the like to cause a computer to function in such a manner as to realize the functions of the embodiment according to the aspect of the present invention. Programs or information handled by the programs are temporarily stored in a volatile memory such as a Random Access Memory (RAM), a non-volatile memory such as a flash memory, a Hard Disk Drive (HDD), or another storage apparatus system.

Note that a program for realizing such functions of the embodiment according to an aspect of the present invention may be recorded on a computer-readable recording medium. The functions may be realized by causing a computer system to read the program recorded on the recording medium for execution. It is assumed that the "computer system" refers to a computer system built into the apparatuses, and the computer system includes an operating system and hardware components such as a peripheral device. In addition, the "computer-readable recording medium" may be a semiconductor recording medium, an optical recording medium, a magnetic recording medium, a medium dynamically retaining the program for a short time, or any other computer-readable recording medium.

In addition, each functional block or various features of the apparatuses used in the aforementioned embodiments may be implemented or performed on an electric circuit, for example, an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a processor of a known type, a controller, a micro-controller, or a state machine instead. The aforementioned electric circuit may include a digital circuit or may include an analog circuit. In addition, in a case that a circuit integration technology that replaces the present integrated circuits appears with advances in semiconductor technologies, one or multiple aspects of the present invention can also use a new integrated circuit based on the technology.

Note that the invention of the present application is not limited to the above-described embodiments. Although apparatuses have been described as an example in the embodiments, the invention of the present application is not limited to these apparatuses, and is applicable to a terminal apparatus or a communication apparatus of a fixed-type or a non-stationary electronic apparatus installed indoors or outdoors, for example, an AV apparatus, a kitchen apparatus, a cleaning or washing machine, an air-conditioning apparatus, office equipment, a vending machine, and other household apparatuses.

Although the embodiments of the present invention have been described in detail above referring to the drawings, the specific configuration is not limited to the embodiments and includes, for example, design changes within the scope that do not depart from the gist of the present invention. Furthermore, in the present invention, various modifications are possible within the scope of claims, and embodiments that are made by suitably combining technical means disclosed according to the different embodiments are also included in the technical scope of the present invention. In addition, a configuration in which elements described in the respective embodiments and having mutually similar effects are substituted for one another is also included.

A User Equipment (UE) according to an aspect of the present invention includes a transmission and/or reception unit and a controller. The transmission and/or reception unit transmits a registration request message including 1st identification information and 2nd identification information. The 1st identification information is information for identifying an SNPN. The 2nd identification information is information indicating support of a hosting network. The transmission and/or reception unit receives a registration reject message including a first cause value. The first cause value is a cause value indicating not authorized for the hosting network. In a case that the registration request message is for localized services in the SNPN, the controller stores the 1st identification information in a forbidden hosting network list, based on the first cause value.

A User Equipment (UE) according to an aspect of the present invention includes a transmission and/or reception unit and a controller. The transmission and/or reception unit transmits a registration request message including 1st identification information and 2nd identification information. The 1st identification information is information for identifying an SNPN. The 2nd identification information is information indicating support of a hosting network. The transmission and/or reception unit receives a registration reject message including a first cause value or a second cause value. The first cause value is a cause value indicating temporarily not authorized for the SNPN. The second cause value is a cause value indicating permanently not authorized for the SNPN. In a case that the registration request message is for localized services in the SNPN, the controller stores the 1st identification information in a list of the SNPNs temporarily forbidden for the localized services, based on the first cause value. In a case that the registration request message is for the localized services in the SNPN, the controller stores the 1st identification information in the list of the SNPNs permanently forbidden for the localized services, based on the second cause value.

A User Equipment (UE) according to an aspect of the present invention includes a transmission and/or reception unit and a controller. The transmission and/or reception unit transmits a registration request message including 1st identification information and 2nd identification information. The 1st identification information is information indicating whether to support a Closed Access Group (CAG). The 2nd identification information is information indicating support of a hosting network. The transmission and/or reception unit receives a registration reject message including a first cause value and 3rd identification information. The first cause value is a cause value indicating not authorized for the hosting network. The 3rd identification information is a list including CAG IDs. In a case that the registration request message is for localized services in a PNI-NPN, the controller replaces the 3rd identification information stored in the UE with the received 3rd identification information, based on the first cause value.

### Cross-Reference of Related Application

The present application claims priority of JP 2022-118330, filed on July 26, 2022, and all the contents thereof are included herein by the reference.

### Reference Signs List

### 1 Mobile communication system

10 UE_A
30 PGW-U
32 PGW-C
35 SGW
40 MME
45 eNB
50 HSS
60 PCRF
80 Access network_A (E-UTRAN)
90 Core network_A
120 Access network_B (5G AN)
122 gNB
130 UPF
132 SMF
140 AMF
150 UDM
160 PCF
190 Core network_B
235 UPF_A
239 UPF_C

## Claims

1. A User Equipment (UE) comprising:
a transmission and/or reception unit;
a controller; and
a storage unit, wherein
the controller manages a first list and a second list,
the first list is a "temporarily forbidden Stand-alone Non-Public Networks (SNPNs) for access for localized services in SNPN" list,
the second list is a "permanently forbidden SNPNs for access for localized services in SNPN" list,
the transmission and/or reception unit
transmits a registration request message to a network, and
receives a registration reject message including a first cause value or a second cause value from the network,
the first cause value is a cause value indicating temporarily not authorized for this SNPN,
in a case of receiving the first cause value, the controller stores an SNPN ID in the first list stored by the storage unit, based on the first cause value,
the second cause value is a cause value indicating permanently not authorized for this SNPN, and
in a case of receiving the second cause value, the controller stores the SNPN ID in the second list stored by the storage unit, based on the second cause value.

2. A communication control method performed by a User Equipment (UE), the communication control method comprising the steps of:
managing a first list and a second list,
wherein the first list is a "temporarily forbidden Stand-alone Non-Public Networks (SNPNs) for access for localized services in SNPN" list,
wherein the second list is a "permanently forbidden SNPNs for access for localized services in SNPN" list;
transmitting, by the UE, a registration request message to a network;
receiving, by the UE, a registration reject message including a first cause value or a second cause value from the network,
wherein the first cause value is a cause value indicating temporarily not authorized for this SNPN,
wherein the second cause value is a cause value indicating permanently not authorized for this SNPN;
in a case of receiving the first cause value, storing, by the UE, an SNPN ID in the first list stored by the UE, based on the first cause value; and
in a case of receiving the second cause value, storing, by the UE, the SNPN ID in the second list stored by the UE, based on the second cause value.
